(19) Europäisches Patentamt
European Patent Office
Office européen des brevets

(11) EP 4 116 382 B1

(12) **EUROPEAN PATENT SPECIFICATION**

(45) Date of publication and mention of the grant of the patent:
**24.07.2024 Bulletin 2024/30**

(21) Application number: **20922748.7**

(22) Date of filing: **11.12.2020**

(51) International Patent Classification (IPC):
***C09D 11/107*** *(2014.01)* ***C09D 11/102*** *(2014.01)*
***C09D 11/38*** *(2014.01)* ***C09D 11/322*** *(2014.01)*

(52) Cooperative Patent Classification (CPC):
**C09D 11/322; C09D 11/102; C09D 11/107; C09D 11/38**

(86) International application number:
**PCT/JP2020/046335**

(87) International publication number:
**WO 2021/176792 (10.09.2021 Gazette 2021/36)**

(54) **AQUEOUS INKJET INK AND PRINTED ITEM**

WÄSSRIGE TINTENSTRAHLDRUCKTINTE UND BEDRUCKTER GEGENSTAND

ENCRE AQUEUSE POUR JET D'ENCRE ET ARTICLE IMPRIMÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2020 JP 2020038302**

(43) Date of publication of application:
**11.01.2023 Bulletin 2023/02**

(73) Proprietors:
- **artience Co., Ltd.**
**Tokyo (JP)**
- **TOYOCOLOR CO., LTD.**
**Tokyo, 104-8381 (JP)**

(72) Inventors:
- **YODA, Atsushi**
**Tokyo 104-8378 (JP)**
- **MASATOKI, Mutsuko**
**Tokyo 104-8378 (JP)**
- **JONAI, Kazuhiro**
**Tokyo 104-8378 (JP)**

(74) Representative: **SSM Sandmair Patentanwälte Rechtsanwalt Partnerschaft mbB**
**Joseph-Wild-Straße 20**
**81829 München (DE)**

(56) References cited:
**EP-A2- 1 707 603**
**EP-A2- 1 811 002**
**WO-A1-2017/168817**
**JP-A- 2005 023 248**
**JP-A- 2013 194 161**
**JP-A- 2016 029 120**
**JP-A- 2018 058 347**
**JP-A- 2018 122 529**
**JP-A- 2019 151 843**
**JP-A- 2019 177 661**
**JP-A- 2020 015 234**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to an aqueous ink for inkjet printing and a printed item.

BACKGROUND ART

The inkjet printing method is a method in which very fine droplets of ink are discharged from an inkjet head and fly and land on a recording medium to form images or text on the recording medium and obtain a printed item, and has the characteristic feature of not requiring a plate.

The electrophotographic method is widely recognized as another printing method that does not require a plate, but the inkjet printing method is superior to the electrophotographic method in terms of the cost of the apparatus itself, running costs during printing, apparatus size, high-speed printing characteristics, and so forth, and is expected to grow in the future due to the spread of digital printing and expansion in uses.

A wide range of inks are used in the inkjet printing method, such as oil-based inks, solvent-based inks, active energy ray curing-based inks, and water-based inks. From thereamong, in recent years, the inkjet printing method based on active energy ray curing is becoming increasingly widespread because it can be applied not only to paper substrates but also to recording mediums such as plastic substrates and glass substrates, it is excellent in terms of the abrasion resistance of the printed item, it can realize high-speed printing, and so on. However, in recent years, regulations on the use of solvents and monomers have been progressing in terms of considering and responding to their harmfulness to the environment and people, and there is a growing demand for these to be replaced with water-based (aqueous) inks.

Furthermore, in recent years, there has been a notable improvement in the performance of inkjet heads, and with this the inkjet printing method is expected to expand into existing printing markets such as those of the offset printing method. In existing printing markets, the image quality, productivity, and color reproducibility of printed items are extremely important. However, if the wettability of ink is poor on low-absorption substrates such as coated paper and art paper, which are commonly used in existing printing markets, the image quality of printed items deteriorates, and using the inkjet printing method it becomes difficult to obtain high image quality of the level of a printed item produced using the offset printing method. Measures have therefore been taken in the past to provide wettability to low-absorption substrates by using a certain amount of a material having a low solubility parameter value (SP value) described later (see Patent Documents 1 and 2). However, with these inks, the surface tension immediately after landing (dynamic surface tension) becomes excessively low, and therefore controlling the meniscus near a nozzle from which the ink is discharged becomes difficult, and stable discharge becomes difficult. Furthermore, depending on the material used, there is a risk of corroding members of the inkjet head and causing a reduction in the life of the inkjet head.

Furthermore, another known measure is to use a fluorine-based surfactant to impart wettability to low-absorption substrates (see Patent Document 3). However, as in the case of a material having a low solubility parameter value, the surface tension immediately after landing decreases dramatically, and therefore there is a high possibility of the printing stability deteriorating. Furthermore, in general, a water-repellent film constituting part of an inkjet head is often subjected to fluorine processing, and from the viewpoint of material affinity, the adhesion and the wetting and spreading of ink on the water-repellent film is also a concern. In addition, also from the viewpoint of environmental regulations, it is preferable for specifications of materials containing fluorine to be avoided as much as possible.

However, in addition to the above environmental regulations, when also taking into account food packaging material regulations and so forth when considering hazardousness to people and future expansion into the package printing market, the materials that can be used in inks are more likely to have high solubility parameter values. However, inks using these materials have high surface tension immediately after landing, and therefore, although printing stability improves, wettability with respect to low-absorption substrates becomes poor.

As described above, resolving the trade-off between image quality with respect to low-absorption substrates and printing stability is considered to be extremely important for expanding inkjet printing uses.

PRIOR ART DOCUMENTS

PATENT DOCUMENTS

Patent Document 1: JP 2004-43518 A
Patent Document 2: International Publication No. 00/022056
Patent Document 3: JP 2007-238813 A

## SUMMARY OF THE INVENTION

### PROBLEMS TO BE SOLVED BY THE INVENTION

An embodiment of the present invention has been devised in order to solve the aforementioned problem, and an object thereof is to provide an aqueous ink for inkjet printing that improves both image quality with respect to low-absorption substrates and the like and printing stability, and is also excellent in terms of the drying properties and storage stability of printed items.

### MEANS TO SOLVE THE PROBLEMS

The inventors recently discovered that the aforementioned object can be achieved by combined use of a wetting agent having a solubility parameter value (SP value) of 11.0 to 15.0 $(cal/cm^3)^{1/2}$, and a (meth)acrylic resin having a polydimethylsiloxane chain structure and a polyether chain structure on a side chain and a weight average molecular weight of 2,000 to 30,000.

In other words, one embodiment of the present invention relates to an aqueous ink for inkjet printing containing a colorant, a resin, a wetting agent, a surfactant, and water, in which

> the wetting agent contains a polyhydric alcohol at 60% by mass or more relative to the total amount of the wetting agent, the polyhydric alcohol having a solubility parameter value (SP value) of 11.0 to 15.0 $(cal/cm^3)^{1/2}$,
> the resin contains a (meth)acrylic resin having a polydimethylsiloxane chain structure and a polyether chain structure on a side chain and a weight average molecular weight of 2,000 to 30,000,
> the (meth)acrylic resin is water soluble,
> the ratio of the blend amount of the polyhydric alcohol to the blend amount of the (meth)acrylic resin is 1500:1 to 6:1 by mass ratio, and
> the content of fluorine atoms in the total amount of the aqueous ink is 500 mass ppm or less.

Another embodiment of the present invention relates to the aforementioned aqueous ink for inkjet printing in which the colorant is a pigment, and the content of the pigment is 0.5 to 15% by mass in the total amount of the aqueous ink.

Another embodiment of the present invention relates to the aforementioned aqueous ink for inkjet printing in which the content of the polyhydric alcohol is 0.5 to 50% by mass in the total amount of the aqueous ink.

Another embodiment of the present invention relates to the aforementioned aqueous ink for inkjet printing in which the content of the (meth)acrylic resin is 0.01 to 5% by mass in the total amount of the aqueous ink.

Another embodiment of the present invention relates to the aforementioned aqueous ink for inkjet printing in which the wetting agent does not contain 2% by mass or more of a wetting agent having a carbon number of 8 or more, in the total amount of the aqueous ink.

Another embodiment of the present invention relates to the aforementioned aqueous ink for inkjet printing in which the wetting agent contains a polyhydric alcohol at 60% by mass or more relative to the total amount of the wetting agent, the polyhydric alcohol having a solubility parameter value (SP value) of 11.0 to 13.0 $(cal/cm^3)^{1/2}$.

Another embodiment of the present invention relates to a printed item obtained using the aforementioned aqueous ink for inkjet printing.

### EFFECTS OF THE INVENTION

An embodiment of the present invention is able to obtain an aqueous ink for inkjet printing that improves both image quality with respect to low-absorption substrates and the like and printing stability, and is also excellent in terms of the drying properties and storage stability of printed items.

### EMBODIMENTS FOR CARRYING OUT THE INVENTION

A preferred embodiment of the present invention is described below in detail. The embodiment described below is an example of the present invention. Furthermore, the present invention is not limited to the following embodiment, and also includes modified examples implemented without altering the gist of the present invention. Note that unless specifically stated otherwise, "parts" and "%" represent "parts by mass" and "% by mass", respectively. Furthermore, ranges indicated using "to" include the numerical values given before and after "to".

1. Aqueous Ink for Inkjet Printing

In one embodiment, an aqueous ink for inkjet printing (hereinafter also simply referred to as "aqueous ink") is specified as containing a polyhydric alcohol (A) having a solubility parameter value (SP value) of 11.0 to 15.0 $(cal/cm^3)^{1/2}$, and a (meth)acrylic resin (B) having a polydimethylsiloxane chain structure and a polyether chain structure on a side chain and a weight average molecular weight of 2,000 to 30,000, and the ratio of the blend amounts thereof and the content of fluorine atoms in the aqueous ink are specified.

As mentioned above, generally with an aqueous ink containing a material having a low solubility parameter value, it is difficult to control the meniscus near a nozzle, and there is a risk that printing stability (discharge stability) may deteriorate. Furthermore, ink droplets discharged from the nozzle do not travel in a straight line or are scattered in the form of mist, resulting in the droplets landing in unintended locations and the droplets coalescing, and raising concern of deterioration in image quality.

In particular, with an aqueous ink containing mainly a material having a solubility parameter value of less than 11.0 $(cal/cm^3)^{1/2}$, there is an improvement in wettability with respect to low-absorption substrates, but adhesive members or the like constituting the inkjet head are corroded, and there is a risk of there also being problems such as printing stability significantly deteriorating and the life of the inkjet head shortening.

Thus, in one embodiment, by using mainly a polyhydric alcohol (A) having a solubility parameter value of 11.0 to 15.0 $(cal/cm^3)^{1/2}$, the aforementioned damage to the inkjet head is suppressed, and deterioration in printing stability is prevented. Furthermore, by using a polyhydric alcohol, which is a compound containing multiple hydroxyl groups, hydrogen bonds form among polyhydric alcohol molecules and/or between the polyhydric alcohol molecules and water molecules, discharged ink droplets are prevented from scattering in the form of mist, and deterioration in image quality can also be suppressed.

However, a solubility parameter value of 11.0 to 15.0 $(cal/cm^3)^{1/2}$ is not a large value, and therefore with just the use of a polyhydric alcohol (A), the aforementioned deterioration in printing stability and image quality may occur. Thus, in one embodiment, in addition to the polyhydric alcohol (A), a (meth)acrylic resin (B) having a polydimethylsiloxane chain structure and a polyether chain structure on a side chain and a weight average molecular weight of 2,000 to 30,000 is used, and as a result the deterioration in printing stability and image quality is prevented, and at the same time an improvement in the storage stability of the aqueous ink is realized.

The (meth)acrylic resin (B) has a polydimethylsiloxane chain which is a hydrophobic structure and a polyether chain which is a hydrophilic structure, and also has a comparatively low weight average molecular weight of 2,000 to 30,000, and can therefore exist stably and uniformly in an aqueous ink containing a polyhydric alcohol (A) having a low solubility parameter value and hydrophobicity, and water. As a result, not only is there no adverse effect on the storage stability of the aqueous ink, but an appropriate viscoelasticity is also imparted to the aqueous ink, and it is thought to be possible to stabilize the meniscus and improve the ability of the discharged ink droplets to travel in a straight line.

As a result of the inventors further proceeding with a diligent investigation, it was found that by adjusting the ratio of the blend amounts of the polyhydric alcohol (A) and the (meth)acrylic resin (B) to 1500:1 to 6:1 by mass ratio, in ink droplets that have landed on a recording medium, the (meth)acrylic resin (B) quickly orients toward the gas-liquid interface, and it is possible to prevent coalescing (color mixing) with other ink droplets applied thereafter. Furthermore, at such time, the wettability of the other ink droplets applied thereafter improves, and thus a further improvement in image quality can be realized. In addition, although the details are not entirely clear, the drying properties of the aqueous ink also improve.

Note that when the (meth)acrylic resin (B) is used in an aqueous ink containing mainly a component having a solubility parameter value of less than 11.0 $(cal/cm^3)^{1/2}$, in the process of the ink droplets drying after having landed on the recording medium, when the solvent ratio in the ink droplets increases, the (meth)acrylic resin (B) dissolves in the component, and therefore coalescing with other ink droplets applied thereafter is likely to occur, and there is a risk of the image quality deteriorating. Furthermore, in a case where the (meth)acrylic resin (B) is used in an aqueous ink mainly containing a component having a solubility parameter value of greater than 15.0 $(cal/cm^3)^{1/2}$, the (meth)acrylic resin (B) is not be able to exist stably in the aqueous ink, and there is a risk that the storage stability and printing stability may deteriorate.

In the aqueous ink of one embodiment, a polyhydric alcohol (A) and a (meth)acrylic resin (B) are used at a suitable blend amount ratio, and furthermore the content of fluorine atoms included in the aqueous ink is specified as 500 mass ppm or less. As mentioned above, limiting the fluorine atom content suppresses the adhesion and the wetting and spreading of the aqueous ink with respect to a nozzle plate (a plate provided with multiple nozzle holes) subjected to water-repellent processing, and is able to prevent deterioration in printing stability. Furthermore, although the details are not entirely clear, limiting the fluorine atom content is also effective in terms of maintaining and improving the storage stability of aqueous ink.

As described above, the aforementioned configuration is indispensable to obtain an aqueous ink that achieves both printing stability and image quality with respect to low-absorption substrates, and also excellent drying properties

and storage stability. Note that the above description merely constitutes speculation and does not constrain the scope and embodiment of the present invention.

Next, each of the materials that constitute the aqueous ink of one embodiment will be described in detail hereinafter.

<Colorant>

The aqueous ink of one embodiment ink contains a colorant. As the colorant, conventionally known dyes and pigments can be used as desired. From thereamong, it is preferable to use a pigment as the colorant from the viewpoint of the light resistance and so forth of the printed item.

As the pigment, any conventionally known organic pigment and inorganic pigment can be used. The content of these pigments (except in the case of a white pigment described later) relative to the total amount of aqueous ink is preferably 2 to 15% by mass, more preferably 2.5 to 12% by mass, and particularly preferably 3 to 10% by mass. By ensuring that the pigment content falls within the above ranges, sufficient color development can be obtained even with single-pass printing described later, and the viscosity of the aqueous ink can be adjusted to be within a range that is suitable for the inkjet printing method, and as a result it is possible to ensure long-term printing stability.

Note that, according to the use or image quality, light-color inks such as light yellow, light cyan, light magenta, and gray, which have a lower content that the pigment content mentioned above, may be used, and in such cases the pigment content is preferably 0.5% by mass or more, and more preferably 0.5 to 15% by mass.

Examples of cyan organic pigments that can be used include C.I. Pigment Blue 1, 2, 3, 15:3, 15:4, 15:6, 16, 22, 60, 64, and 66. From thereamong, from the viewpoint of excellent color development and light resistance, it is preferable to use one or more pigments selected from the group consisting of C.I. Pigment Blue 15:3 and 15:4. Furthermore, green pigments such as C.I. Pigment Green 7, 36, 43, and 58 may also be mixed from the viewpoint of improving color reproducibility.

Examples of magenta organic pigments that can be used include C.I. Pigment Red 5, 7, 12, 22, 23, 31, 48 (Ca), 48 (Mn), 49, 52, 53, 57 (Ca), 57:1, 112, 122, 146, 147, 150, 185, 202, 209, 238, 242, 254, 255, 266, 269, and 282, and C.I. Pigment Violet 19, 23, 29, 30, 37, 40, 43, and 50. From thereamong, from the viewpoint of excellent color development and light resistance, it is preferable to use one or more pigments selected from the group consisting of C.I. Pigment Red 122, 146, 150, 185, 202, 209, 254, 266, 269, and 282, and C.I. Pigment Violet 19.

Examples of yellow organic pigments that can be used include C.I. Pigment Yellow 10, 11, 12, 13, 14, 17, 20, 24, 74, 83, 86, 93, 94, 95, 109, 110, 117, 120, 125, 128, 137, 138, 139, 147, 148, 150, 151, 154, 155, 166, 168, 180, 185, and 213. From thereamong, from the viewpoint of superior color development, it is preferable to use one or more pigments selected from the group consisting of C.I. Pigment Yellow 12, 13, 14, 74, 83, 120, 150, 151, 154, 155, 180, and 185.

Examples of black organic pigments that can be used include aniline black, Lumogen black, and azomethine azo black. Furthermore, multiple chromatic color pigments such as the cyan pigments, magenta pigments, and yellow pigments mentioned above, and the orange pigments, green pigments, and brown pigments mentioned below can also be used for a black pigment.

Examples of black inorganic pigments that can be used include carbon black and iron oxide. The carbon black may be either a carbon black produced according to a furnace method or a carbon black produced according to a channel method. Specific examples of commercially available products that can be used are No. 25, 30, 33, 40, 44, 45, 52, 850, 900, 950, 960, 970, 980, 1000, 2200B, 2300, 2350, and 2600, MA7, MA8, MA77, MA100, and MA230 (above, manufactured by Mitsubishi Chemical Corporation); RAVEN 760UP, 780UP, 860UP, 900P, 1000P, 1060UP, 1080UP, and 1255 (above, manufactured by Aditya Birla); REGAL 330R, 400R, and 660R, and MOGUL L (above, manufactured by Cabot Corporation); and NIPex 160 IQ, 170 IQ, 35, and 75, Printex 30, 35, 40, 45, 55, 75, 80, 85, 90, 95, and 300, Special Black 350 and 550, and Nerox 305, 500, 505, 600, and 605 (above, manufactured by Orion Engineered Carbons).

Examples of white organic pigments that can be used include the hollow resin particles and the like disclosed in JP H3-26724 A, JP 2009-263553 A, and so forth.

Furthermore, examples of white inorganic pigments that can be used include alkaline earth metal sulfates such as barium sulfate, alkaline earth metal carbonates such as calcium carbonate, silicas such as fine powder silicic acid and synthetic silicate, calcium silicate, alumina, alumina hydrate, titanium oxide, zinc oxide, talc, and clay. From thereamong, titanium oxide is most preferable from the viewpoint of concealability and tinting strength.

The content of the aforementioned white pigment content relative to the total amount of aqueous ink is preferably 3 to 50% by mass, and more preferably 5 to 30% by mass.

Note that the aqueous ink of one embodiment may be a specific color ink containing a specific color pigment such as an orange pigment, a green pigment, and a brown pigment. Specifically, C.I. Pigment Orange 16, 36, 43, 51, 55, 59, 61, 64, and 71, C.I. Pigment Green 7, 36, 43, and 58, Pigment Brown 23, 25, and 26, and the like can be used.

<Wetting Agent>

The aqueous ink of one embodiment contains a wetting agent (humectant). Furthermore, the wetting agent contains a polyhydric alcohol (A) at 60% by mass or more relative to the total amount of the wetting agent, the polyhydric alcohol (A) having a solubility parameter value (SP value) of 11.0 to 15.0 $(cal/cm^3)^{1/2}$.

Note that the term "wetting agent" used in the present specification refers is a component that can suppress excessive drying of the aqueous ink to which it is added and maintain wettability. Generally, as wetting agents, there are components that are liquid at normal temperature (25°C) (organic solvents and the like) and components that are solid at normal temperature (glycerol derivatives, urea derivatives, polyethylene glycol, and the like), but in the present specification "wetting agent" refers only to compounds that are liquid at normal temperature and have a boiling point under 1 atmosphere of 180°C or higher.

(Polyhydric Alcohol (A))

As mentioned above, a wetting agent that can be used in one embodiment includes a polyhydric alcohol (A) having 11.0 to 15.0 $(cal/cm^3)^{1/2}$ as a solubility parameter value (SP value), which can be calculated according to a method described later. Furthermore, it is more preferable to use a polyhydric alcohol (A1) having a solubility parameter value of 11.0 to 13.0 $(cal/cm^3)^{1/2}$ as a wetting agent. Furthermore, the polyhydric alcohol (A) and the polyhydric alcohol (A1) may be used in combination.

Furthermore, the polyhydric alcohol (A) used is preferably water soluble, and in addition, the viscosity at 25°C is preferably 1 to 100 mPa. s.

Although there are various hitherto known methods for calculating the solubility parameter value, in the present specification, the value at 25°C calculated according to the method described on pages 85 and 86 of "Plastics Materials 6th Edition" (written by J.A. Brydson, published by Butterworth-Heinemann, 1995) shall be used.

Taking 1,2-propanediol as an example to explain the specific calculation method, the latent heat of evaporation ($\Delta H$) of 1,2-propanediol, calculated from the boiling point (188°C), is $23.7 \times (188 + 273) + 0.02 \times (188 + 273)^2 - 2950 \fallingdotseq 12232.4$ (cal/mol). Then, using this value, the molecular weight of 1,2-propanediol [76.1 (g/mol)], and the density of 1,2-propanediol [1.04 $(g/cm^3)$], 12.6 $(cal/cm^3)^{1/2}$ is calculated from formula (1) below.

Formula (1):

$$\text{SP value } ((cal/cm^3)^{1/2}) = \{(\Delta H - RT) \div (M \div D)\}^{1/2}$$

In the above formula (1), $\Delta H$ represents the latent heat of evaporation of the wetting agent (cal/mol), R represents the gas constant (1.99 cal/Kmol), T represents the temperature (25°C = 298 K), M represents the molecular weight of the wetting agent (g/mol), and D represents the density of the wetting agent $(g/cm^3)$.

Furthermore, in the aqueous ink of one embodiment, the total content of the polyhydric alcohol (A) is 60% by mass or more relative to the total amount of the wetting agent included in the aqueous ink. By ensuring that the content of polyhydric alcohol (A) is within the above range, it is possible to easily control the image quality and drying properties together with maintaining wettability with respect to the recording medium. Furthermore, the discharge stability from the nozzles can also be improved, and as a result, images having excellent image quality can be obtained for both recording mediums having an absorbent layer and low-absorption substrates. From the viewpoint of further suitable expression of the above effects, the total content of the polyhydric alcohol (A) relative to the total amount of the wetting agent included in the aqueous ink is preferably 70% by mass or more, and particularly preferably 80% by mass or more.

Examples of the polyhydric alcohol (A) having a solubility parameter value of 11.0 to 15.0 $(cal/cm^3)^{1/2}$ include, but are not limited to, 1,2-propanediol (SP value 12.6 /boiling point 188°C), 1,2-butanediol (SP value 11.5 /boiling point 194°C), ethylene glycol (SP value 14.7 /boiling point 196°C), 1,3-butanediol (SP value 11.3 /boiling point 208°C), 1,3-propanediol (SP value 13.3 /boiling point 210°C), 2,3-butanediol (SP value 11.3 /boiling point 182°C), 1,4-butanediol (SP value 12.32 /boiling point 230°C), 2-methyl-1,3-propanediol (SP value 12.0 /boiling point 214°C), glycerin (SP value 14.7 /boiling point 290°C), and 1,2,3-butanetriol (SP value 13.5 /boiling point approximately 294°C). One of these polyhydric alcohols (A) may be used alone or two or more may be used.

Although the details are not entirely clear, it should be noted that among the examples of polyhydric alcohols (A) given above, a compound having a 1-hydroxyethyl group ($-CH(OH)CH_3$) is suitably selected in one embodiment because it facilitates obtaining an aqueous ink having both printing stability and printed item image quality compared to other regioisomers. Examples of the compound having a 1-hydroxyethyl group include 1,2-propanediol, 1,3-butanediol, 2,3-butanediol, and 1,2,3-butanetriol.

The boiling point under 1 atmosphere of the polyhydric alcohol (A) is preferably 180 to 250°C, and more

preferably 180 to 230°C. This is because the use of a polyhydric alcohol (A) satisfying the above boiling point ranges makes it possible to easily control the wettability, permeability, and drying properties of the aqueous ink without being affected by the type of recording medium. Furthermore, this also makes it possible to directly render images with excellent image quality and fixability on a variety of recording mediums while maintaining moisture retention on the nozzles, without the need for larger drying equipment. Note that the boiling point under 1 atmosphere in the present specification and so forth can be measured using a thermal analysis device, for example.

In particular, it is also preferable to use only an alkanediol that has a boiling point under 1 atmosphere of 180 to 230°C as polyhydric alcohol (A). This is because even on highly hydrophobic recording mediums such as coated paper, art paper, or polyvinyl chloride sheets, which are commonly used in existing printing markets, image quality can be significantly improved by increasing the wettability of the aqueous ink and improving the dot set performance on the recording medium.

The content of the polyhydric alcohol (A) in the total amount of the aqueous ink is preferably 0.5 to 50% by mass, more preferably 1 to 45% by mass, and particularly preferably 10 to 40% by mass. This content is the same also in the case where the polyhydric alcohol (A1) is used instead of the polyhydric alcohol (A).

(Other Wetting Agent)

The aqueous ink of one embodiment may contain a wetting agent other than the polyhydric alcohol (A) mentioned above (hereinafter also referred to as "other wetting agent"), specifically, a compound which has a boiling point under 1 atmosphere of 180°C or higher and is liquid at normal temperature (25°C), and which does not belong to the polyhydric alcohols (A). Examples thereof include the following:

divalent alcohols (glycols) such as 1,2-pentanediol, 1,2-hexanediol, 1,6-hexanediol, 1,2-heptanediol, 3-methyl-1,3-butanediol, 3-methyl-1,5-pentanediol, 2-methyl-2-propyl-1,3-propanediol, 2-methylpentane-2,4-diol, 2-ethyl-1,3-hexanediol, 1,2-octanediol, and dipropylene glycol;

glycol monoalkyl ethers such as diethylene glycol monomethyl ether, diethylene glycol monoethyl ether, diethylene glycol monopropyl ether, diethylene glycol monobutyl ether, diethylene glycol monopentyl ether, diethylene glycol monohexyl ether, triethylene glycol monomethyl ether, triethylene glycol monoethyl ether, triethylene glycol monopropyl ether, triethylene glycol monobutyl ether, tetraethylene glycol monomethyl ether, tetraethylene glycol monoethyl ether, tetraethylene glycol monobutyl ether, dipropylene glycol monomethyl ether, dipropylene glycol monoethyl ether, dipropylene glycol monopropyl ether, tripropylene glycol monomethyl ether, and tripropylene glycol monoethyl ether;

glycol dialkyl ethers such as diethylene glycol butyl methyl ether, diethylene glycol diethyl ether, triethylene glycol dimethyl ether, triethylene glycol methyl ethyl ether, triethylene glycol butyl methyl ether, triethylene glycol diethyl ether, tetraethylene glycol dimethyl ether, tetraethylene glycol methyl ethyl ether, tetraethylene glycol butyl methyl ether, and tetraethylene glycol diethyl ether; and

nitrogen-containing solvents such as N,N-dimethyl-β-methoxypropionamide, N,N-dimethyl-β-ethoxypropionamide, N,N-dimethyl-β-butoxypropionamide, N,N-dimethyl-β-pentoxypropionamide, N,N-dimethyl-β-hexoxypropionamide, N,N-dimethyl-β-heptoxypropionamide, N,N-dimethyl-β-2-ethylhexoxypropionamide, N,N-dimethyl-β-octoxypropionamide, N,N-diethyl-β-butoxypropionamide, N,N-diethyl-β-pentoxypropionamide, N,N-diethyl-β-hexoxypropionamide, N,N-diethyl-β-heptoxypropionamide, and N,N-diethyl-β-octoxypropionamide.

It is preferable that the wetting agent included in the aqueous ink does not contain 2% by mass or more of a wetting agent having a carbon number of 8 or more, in the total amount of the aqueous ink. A wetting agent having a carbon number of 8 or more is considered to be highly compatible with a (meth)acrylic resin (B) described later. Therefore, by limiting the content of a wetting agent having a carbon number of 8 or more, the effect of the (meth)acrylic resin (B) can be sufficiently expressed, and it is possible to improve printing stability and image quality. Note that from among the wetting agents listed above, examples of wetting agents having a carbon number of 8 or more include 2-ethyl-1,3-hexanediol, 1,2-octanediol, diethylene glycol monobutyl ether, diethylene glycol monopentyl ether, diethylene glycol monohexyl ether, triethylene glycol monoethyl ether, triethylene glycol monopropyl ether, triethylene glycol monobutyl ether, tetraethylene glycol monomethyl ether, tetraethylene glycol monoethyl ether, tetraethylene glycol monobutyl ether, dipropylene glycol monoethyl ether, dipropylene glycol monopropyl ether, tripropylene glycol monomethyl ether, tripropylene glycol monoethyl ether, diethylene glycol butyl methyl ether, diethylene glycol diethyl ether, triethylene glycol dimethyl ether, triethylene glycol methyl ethyl ether, triethylene glycol butyl methyl ether, triethylene glycol diethyl ether, tetraethylene glycol dimethyl ether, tetraethylene glycol methyl ethyl ether, tetraethylene glycol butyl methyl ether, tetraethylene glycol diethyl ether, N,N-dimethyl-β-butoxypropionamide, N,N-dimethyl-β-pentoxypropionamide, N,N-dimethyl-β-hexoxypropionamide, N,N-dimethyl-β-heptoxypropionamide, N,N-dimethyl-β-2-ethylhexoxypropionamide, N,N-dimethyl-β-octoxypropionamide, N,N-diethyl-β-butoxypropionamide, N,N-diethyl-β-pentoxypropionamide, N,N-diethyl-β-hexoxypropionamide, N,N-diethyl-β-heptoxypropionamide, and N,N-diethyl-β-octoxypropionamide.

<Resin>

The aqueous ink of one embodiment contains, as a resin, a (meth)acrylic resin (B) having a polydimethylsiloxane chain structure and a polyether chain structure on a side chain and a weight average molecular weight of 2,000 to 30,000. The (meth)acrylic resin (B) is used as a dispersing resin, binder resin, anti-friction agent, surfactant, viscosity adjuster, or the like, and may be used having multiple functions.

Note that "(meth)acrylic" and "(meth)acrylate" used in the present specification are assumed to mean "acrylic or methacrylic" and "acrylate or methacrylate," respectively. Furthermore, as described later, in addition to a (meth)acrylic-based monomer, a styrene-based monomer may be used as an ethylenic unsaturated monomer constituting the "(meth)acrylic resin" in the present specification and so forth.

((Meth)Acrylic Resin (B))

The (meth)acrylic resin (B) may be water-soluble or water-insoluble. From thereamong, in terms of existing more stably and uniformly in an aqueous ink containing the polyhydric alcohol (A) and water, it is preferable to use a (meth)acrylic resin (B) that is water-soluble. Furthermore, from the same viewpoint, the weight average molecular weight of the (meth)acrylic resin (B) is preferably 3,000 to 25,000, more preferably 4,000 to 20,000, and particularly preferably 4,500 to 15,000.

Note that "is water soluble" used in the present specification is assumed to mean that a mixture of 1 g of a target material and 100 g of water is transparent, or a sample of the mixture is in a state where the particle size thereof cannot be measured. However, in the case where the target material is a resin and the resin has an acid value, it is assumed that the resin is neutralized with an equimolecular amount of a base (potassium hydroxide, for example) and then mixed with water. Furthermore, it is assumed that the particle size is measured under the condition of 25°C according to a dynamic light scattering method (for example, a "Nanotrac UPA-EX150" manufactured by MicrotracBel).

Furthermore, the weight average molecular weight of the (meth)acrylic resin (B) is the polystyrene-equivalent molecular weight, which can be measured using a "HLC-8120 GPC" manufactured by Tosoh Corporation equipped with a "TSKgel (registered trademark)" column manufactured by Tosoh Corporation and fitted with an RI detector, and using tetrahydrofuran as the eluent.

The (meth)acrylic resin (B) used in the aqueous ink of one embodiment may be synthesized or may be a commercially available product. Examples of methods for synthesizing the (meth)acrylic resin (B) include a method of synthesizing a (meth)acrylic resin using an ethylenic unsaturated monomer having a polydimethylsiloxane chain structure and/or a polyether chain structure, or a method of adding a compound having a polydimethylsiloxane chain structure and a compound having a polyether chain structure to a pre-synthesized (meth) acrylic resin.

Here, an ethylenic unsaturated monomer having a polydimethylsiloxane chain structure may be synthesized or a may be a commercially available product. Examples of methods for synthesizing an ethylenic unsaturated monomer having a polydimethylsiloxane chain structure include conventionally known methods such as a dehydrochlorination reaction of a siloxane compound having a Si-Cl structure and an ethylenic unsaturated monomer compound having a hydroxyl group, an addition reaction of a siloxane compound having a Si-H structure and an ethylenic unsaturated monomer compound having a vinyl group, and an addition reaction of a siloxane compound having a hydroxyl group and an ethylenic unsaturated monomer compound having an epoxy group. Meanwhile, examples of commercially available ethylenic unsaturated monomers having a polydimethylsiloxane chain structure include KF-2012, X-22-174ASX, X-22-174BX, X-22-174DX, X-22-2404, X-22-2426, and X-22-2475 manufactured by Shin-Etsu Chemical Co., Ltd., and Silaplane FM-0711, FM-0721, and FM-0725 manufactured by JNC Corporation.

Furthermore, as ethylenic unsaturated monomers having a polyether chain structure, alkoxy polyalkylene glycol (meth)acrylate, phenoxy polyalkylene glycol (meth)acrylate, alkylphenoxy polyalkylene glycol (meth)acrylate, or the like can be used, and examples of commercially available products include AM-90G, AM-130G, AMP-20GY, M-90G, and M-230G manufactured by Shin-Nakamura Chemical Co., Ltd.; Light Acrylate 130A, Light Acrylate DPM-A, Light Acrylate EC-A, Light Acrylate EHDG-AT, Light Acrylate MTG-A, Light Acrylate P2H-A, Light Acrylate P-200A, Light Ester 041MA, Light Ester 130MA, and Light Ester BC manufactured by Kyoeisha Chemical Co.; and Fancryl FA-314A, Fancryl FA-318A, and Fancryl FM-400M (100) manufactured by Showa Denko Materials Co., Ltd.

Note that in the methods for synthesizing an ethylenic unsaturated monomer having a polydimethylsiloxane chain structure mentioned above, any of the compounds used in the synthesis may have a polyether chain structure. For example, it is possible to obtain an ethylenic unsaturated monomer having a polydimethylsiloxane chain structure and a polyether chain structure by using polyalkylene glycol monoallyl ether (meth)acrylate as the ethylenic unsaturated monomer compound having a vinyl group. Furthermore, the (meth)acrylic -modified silicone macro monomer and the like disclosed in International Publication No. 2018/181645, for example, can also be used as an ethylenic unsaturated

monomer having a polydimethylsiloxane chain structure and a polyether chain structure.

The (meth)acrylic resin (B) having a polydimethylsiloxane chain structure and a polyether chain structure on a side chain may contain a structural unit that does not have a polydimethylsiloxane chain structure and a polyether chain structure. Specific examples include the following:

alkyl group-containing (meth)acrylic-based monomers such as methyl (meth)acrylate, ethyl (meth)acrylate, propyl (meth)acrylate, butyl (meth)acrylate, isobutyl (meth)acrylate, pentyl (meth)acrylate, hexyl (meth)acrylate, octyl (meth)acrylate, 2-ethylhexyl (meth)acrylate, nonyl (meth)acrylate, decyl (meth)acrylate, lauryl (meth)acrylate, myristyl (meth)acrylate, cetyl (meth)acrylate, stearyl (meth)acrylate, arachyl (meth)acrylate, behenyl (meth)acrylate, lignoceryl (meth)acrylate, cerotoyl (meth)acrylate, montanyl (meth)acrylate, melissyl (meth)acrylate, dotriacontanoyl (meth)acrylate, tetratriacontanoyl (meth)acrylate, and hexatriacontanoyl (meth)acrylate;
aromatic ring-containing (meth)acrylic-based monomers such as phenyl (meth)acrylate and benzyl (meth)acrylate;
polyfunctional (meth)acrylic-based monomers such as 1,6-hexanediol di(meth)acrylate, 1,9-nonanediol di(meth)acrylate, neopentyl glycol di(meth)acrylate, and trimethylolpropane tri(meth)acrylate; and
styrene-based monomers such as styrene, o-methylstyrene, m-methylstyrene, p-methylstyrene, α-methylstyrene, p-ethylstyrene, 2,4-dimethylstyrene, p-n-butylstyrene, p-tert-butylstyrene, p-n-hexylstyrene, p-n-octylstyrene, p-methoxystyrene, p-phenylstyrene, and p-chlorostyrene.

Meanwhile, as mentioned above, a commercially available form of (meth)acrylic resin (B) may be used. A specific example thereof is BYK-3565 manufactured by BYK-Chemie Japan K.K., or the like.

The content of the (meth)acrylic resin (B) in the total amount of the aqueous ink is preferably 0.01 to 5% by mass, more preferably 0.1 to 4% by mass, and particularly preferably 0.3 to 3% by mass.

(Other Resins)

The aqueous ink of one embodiment may contain a resin other than the (meth)acrylic resin (B) mentioned above (hereinafter also referred to as "other resin"). The other resin may be used as a dispersing resin, binder resin, anti-friction agent, viscosity adjuster, or the like, and may be used having multiple functions. Furthermore, one other resin alone may be used, or two or more other resins may be used in combination.

Types of the other resin include (meth)acrylic resins other than the (meth)acrylic resin (B), urethane resins, styrene-butadiene resins, styrene-maleic acid resins, maleic acid resins, fluororesins, vinyl chloride resins, vinyl chloride-vinyl acetate resins, olefin resins, olefin-maleic acid resins, and olefin-vinyl acetate resins. Furthermore, there are no particular limitations on the molecular structures thereof, and a random structure, block structure, comb-shaped structure, star-shaped structure, or the like can be selected as desired.

The other resin may be water-soluble or water-insoluble. Furthermore, in the case where a water-insoluble resin is used, it is preferable to have the resin present in an aqueous medium in the form of resin microparticles from the viewpoint of the storage stability and printing stability of the aqueous ink. In general, resin microparticles have a higher molecular weight compared to water-soluble resins, and can lower the ink viscosity and allow a larger amount of resin to be blended into the ink, and are therefore suitable for increasing the resistance of printed items. However, in the case where resin microparticles are used as a binder resin, there is a risk that the resin microparticles which are in a dispersed state may aggregate and begin to form a film when water volatilizes, thereby causing clogging at the nozzles and a reduction in printing stability. Thus, it is preferable to control the type and amount of the monomer constituting the resin microparticles, and for the glass transition point (Tg) of the binder resin to be 80°C or higher.

Meanwhile, a water-soluble resin can also be used as the other resin from the viewpoint of ensuring the printing stability of the aqueous ink and considering also the maintenance performance and the like of an inkjet printer. When a water-soluble resin is used, the weight average molecular weight thereof is preferably 5,000 to 50,000, and more preferably 10,000 to 40,000. By having a weight average molecular weight of 5,000 or more, it is possible to obtain good coating film durability for printed items, and by having a weight average molecular weight of 50,000 or less, it is possible to obtain an aqueous ink having good discharge stability from the inkjet head and excellent printing stability.

Furthermore, the acid value is also important when using a water-soluble resin. Although it varies depending on the use, for example, when a water-soluble resin is used as a binder resin or an anti-friction agent, the acid value is preferably 10 to 80 mgKOH/g, more preferably 20 to 50 mgKOH/g, and particularly preferably 20 to 45 mgKOH/g. An acid value of 10 mgKOH/g or more prevents clogging at the nozzles and it is possible to ensure printing stability. Furthermore, if the acid value is 80 mgKOH/g or less, the water resistance of the printed item will not deteriorate significantly.

Furthermore, when a water-soluble resin is used as a dispersing resin, the acid value is preferably 100 to 400 mgKOH/g, more preferably 130 to350 mgKOH/g, and even more preferably 150 to 300 mgKOH/g. If the acid value is 100 mgKOH/g or more, the resin adsorbs suitably to the colorant, which results in an aqueous ink having good storage

stability. Furthermore, if the acid value is 400 mgKOH/g or less, the interaction among the water-soluble resin particles becomes more suitable, and the viscosity of the colorant dispersion can be lowered.

<Surfactant>

The aqueous ink of one embodiment contains a surfactant for the purpose of adjusting surface tension, and improving the wettability of the aqueous ink on the recording medium and improving image quality. In one embodiment, any of cationic, anionic, amphoteric, and nonionic surfactants can be used. Note that in the present specification and so forth, it is assumed that the aforementioned (meth)acrylic resin (B) and the compounds corresponding to the other resin are not included in the "surfactant".

Examples of cationic surfactants include fatty acid amine salts, aliphatic quaternary ammonium salts, benzalkonium salts, benzethonium chloride, pyridinium salts, and imidazolinium salts.

Examples of anionic surfactants include fatty acid soaps, N-acyl-N-methylglycine salts, N-acyl-N-methyl-β-alanine salts, N-acylglutamates, acylated peptides, alkylsulfonates, alkyl benzene sulfonates, alkyl naphthalene sulfonates, dialkyl sulfosuccinate ester salts, alkyl sulfoacetates, α-olefin sulfonates, N-acylmethyltaurine, sulfated oils, higher alcohol sulfate ester salts, secondary higher alcohol sulfate ester salts, alkyl ether sulfates, secondary higher alcohol ethoxysulfates, fatty acid alkylolamide sulfate ester salts, alkyl ether phosphate ester salts, and alkyl phosphate ester salts.

Amphoteric surfactants include carboxybetaine, sulfobetaine, aminocarboxylates, and imidazolinium betaine.

Nonionic surfactants include polyoxyethylene alkyl ether, polyoxyethylene alkyl phenyl ether, polyoxyethylene sterol ether, polyoxyethylene lanolin derivative polyoxyethylene polypropylene alkyl ether, polyoxyethylene glycerol fatty acid ester, polyoxyethylene castor oil, hardened castor oil, polyoxyethylene sorbitol fatty acid ester, polyethylene glycol fatty acid ester, fatty acid monoglycerides, polyglycerol fatty acid ester, sorbitan fatty acid ester, propylene glycol fatty acid ester, sucrose sugar fatty acid ester, fatty acid alkanolamides, polyoxyethylene fatty acid amides, polyoxyethylene alkylamines, alkylamine oxides, acetylene glycol, acetylene alcohol, polyoxyethylene acetylene glycol ether, polyoxypropylene acetylene glycol ether, polydimethylsiloxane, polyoxyethylene-modified polydimethylsiloxane, polyoxypropylene-modified polydimethylsiloxane, polyoxyethylene-polyoxypropylene-modified polydimethylsiloxane, 2-(perfluoroalkyl)ethanol, and polyalkoxyalkylene oxide-modified polyethylene glycol containing a perfluoroalkyl group.

Among the examples of surfactants given above, from the viewpoint of improving wettability with respect to a printing substrate and obtaining an aqueous ink having excellent image quality, it is preferable to use one or more selected from the group consisting of acetylene glycol, acetylene alcohol, polyoxyethylene acetylene glycol ether, polyoxyethylene-modified polydimethylsiloxane, polyoxypropylene-modified polydimethylsiloxane, and polyoxyethylene-polyoxypropylene-modified polydimethylsiloxane. In particular, from the viewpoint of being able to control the surface tension of the aqueous ink to be in a suitable range, it is preferable to use one or more selected from the group consisting of acetylene glycol, polyoxyethylene acetylene glycol ether, polyoxyethylene-modified polydimethylsiloxane, and polyoxyethylene-polyoxypropylene-modified polydimethylsiloxane. Note that one surfactant may be used alone or two or more may be used in combination.

When at least one of polyoxyethylene-modified polydimethylsiloxane and polyoxyethylene-polyoxypropylene-modified polydimethylsiloxane is used as a surfactant, the blend amount thereof relative to the total amount of aqueous ink is preferably 0.1 to 5% by mass, and more preferably 0.5 to 3% by mass. By ensuring that the blend amount falls within the above ranges, it is possible to control the color mixing of aqueous ink droplets.

Furthermore, when at least one of acetylene glycol and polyoxyethylene acetylene glycol ether is used as a surfactant, the blend amount thereof relative to the total amount of aqueous ink is preferably 0.1 to 5% by mass, and more preferably 0.5 to 4% by mass. By having a blend amount of 0.1% by mass or more, it is possible to attain the effect of sufficiently lowering the dynamic surface tension of the aqueous ink, and it is possible to improve image quality. Furthermore, by having a blend amount of 5% by mass or less, it is possible to ensure that the dynamic surface tension of the aqueous ink falls within a suitable range, it is possible to control the wettability around the nozzles and to control the meniscus, and stable discharge from the inkjet head is possible; as a result, printing stability improves.

In particular, from the viewpoint of being able to produce printed items having good image quality with respect to a wide range of printing substrates, it is particularly preferable to use in combination one or more selected from the group consisting of polyoxyethylene-modified polydimethylsiloxane and polyoxyethylene-polyoxypropylene-modified polydimethylsiloxane, and one or more selected from the group consisting of acetylene glycol and polyoxyethylene acetylene glycol ether.

<Water>

The aqueous ink of one embodiment contains water. The water content in the total mass of the aqueous ink is preferably in the range of 45 to 95% by mass, and more preferably 50 to 75% by mass.

The water contained in the aqueous ink is preferably not typical water containing various ions but rather ion-exchanged water (deionized water).

<Other Components>

Furthermore, the aqueous ink of one embodiment may also contain a solvent other than the wetting agent mentioned above (hereinafter also referred to as "other solvent"), specifically, a compound which has a boiling point under 1 atmosphere of less than 180°C. Examples thereof include the following:

monovalent alcohols such as methanol, ethanol, 1-propanol, 2-propanol, 1-butanol, 2-butanol, 3-methoxy-1-butanol, and 3-methoxy-3-methyl-1-butanol;
low-boiling point glycol monoalkyl ethers such as ethylene glycol monoethyl ether, ethylene glycol monobutyl ether, propylene glycol monomethyl ether, propylene glycol monoethyl ether, propylene glycol monopropyl ether, and propylene glycol monobutyl ether; and
low-boiling point glycol dialkyl ethers such as diethylene glycol dimethyl ether and diethylene glycol methyl ethyl ether.

The blend amount of these other solvents in the total amount of the aqueous ink is preferably less than 10% by mass (may be 0% by mass), and particularly preferably less than 5% by mass (may be 0% by mass).

Furthermore, in the aqueous ink of one embodiment, besides the above components, additives such as anti-foaming agents, preservatives, infrared absorbers, and UV absorbers can be added as appropriate to obtain an ink having the desired physical properties as required. A suitable amount of these additives to be added is 0.01 to 5% by mass relative to the total mass of the aqueous ink.

Note that the aqueous ink of one embodiment preferably does not substantially contain a polymerizable monomer. Here, "does not substantially contain" means that a polymerizable monomer is not intentionally added, and does not exclude the mixing or generation of trace amounts during the production and storage of the aqueous ink. Specifically, the content of a polymerizable monomer in the total amount of the aqueous ink is preferably 1% by mass or less (may be 0% by mass), more preferably 0.5% by mass or less (may be 0% by mass), and particularly preferably 0.2% by mass or less (may be 0% by mass).

[Viscosity of Aqueous Ink]

The viscosity of the aqueous ink of one embodiment is preferably 4 to 20 mPa- s, more preferably 5 to 17 mPa. s, and particularly preferably 6 to 15 mPa- s. Note that the above viscosity is a value measured at 25°C, and in one embodiment can be measured using a "TVE-25L" (cone plate-type E-type viscometer) manufactured by Toki Sangyo Co., Ltd.

[Static Surface Tension of Aqueous Ink]

Furthermore, the static surface tension of the aqueous ink of one embodiment is preferably 18 to 40 mN/m, more preferably 20 to 35 mN/m, and particularly preferably 22 to 32 mN/m. Note that the above static surface tension is a value measured at 25°C, and in one embodiment can be measured according to a platinum plate method (Wilhelmy method) using a "CBVP-Z" manufactured by Kyowa Interface Science Co., Ltd.

[Fluorine Atom Content in Aqueous Ink]

As mentioned above, the fluorine atom content included in the aqueous ink of one embodiment is 500 mass ppm or less (may be 0 mass ppm) in the total amount of the aqueous ink. The lower the fluorine atom content, the more it is possible to suppress deterioration in printing stability and storage stability; therefore, the fluorine atom content in the total amount of the aqueous ink is more preferably 300 mass ppm or less (may be 0 mass ppm), and particularly preferably 100 mass ppm or less (may be 0 mass ppm).

Fluorine atoms are included in, for example, fluorine atom-containing surfactants, fluororesins, fluorine atom-containing colorants, and the like. Consequently, by reducing the amount added of these materials containing fluorine atoms, or by not using them, the fluorine atom content in the aqueous ink can be suppressed to 500 mass ppm or less.

The fluorine atom content can be calculated from the structural formula and blend amount of the material containing fluorine atoms, contained in the aqueous ink. For example, in the case where 0.5% by mass of a fluorine atom-containing surfactant represented by general formula (2) below is included in the total amount of the aqueous ink, the molecular weight of the fluorine-based surfactant is 2756.4, the content of fluorine atoms included in one molecule is 40, and the atomic weight of the fluorine atoms is 19. Therefore, the content of fluorine atoms included in the aqueous ink is $(19 \times 40 \div 2756.4) \times 0.5\% \fallingdotseq 0.1379$ [%] = 1379 [mass ppm].

[Chemical formula 1]

[General formula (2)]

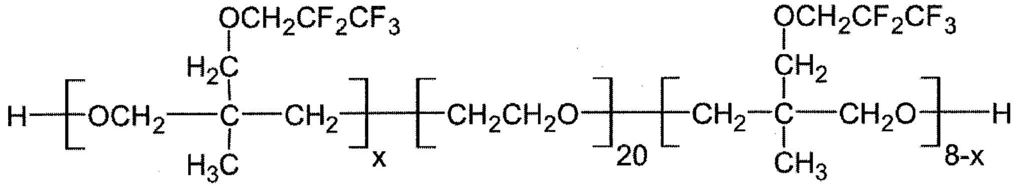

Note that in general formula (2), x is an integer of 1 to 7.

[Inkjet Printing Method]

The aqueous ink of one embodiment is used in an inkjet printing method. As an inkjet printing method, either the single-pass method or the serial method may be employed. In the single-pass method, aqueous ink is discharged only once and recorded onto the recording medium. In the serial method, recording is performed while a short shuttle head is scanned back and forth within the maximum recording width of the recording medium in a direction perpendicular to the direction in which the recording medium is transported. Furthermore, an inkjet recording device that carries out printing according to the inkjet printing method preferably has, in addition to an inkjet head that discharges aqueous ink (ink discharge means), a drying means that dries the aqueous ink discharged from the inkjet head. For example, in a single-pass inkjet recording device, the ink discharge means and drying means are arranged sequentially from the upstream side (the side from which the recording medium is transported) in the direction in which the recording medium is transported. In this case, after the aqueous ink discharged from the inkjet head lands on the recording medium, a drying process is carried out by the drying means.

Furthermore, there are no particular limitations on the inkjet method, and conventionally known methods may be used, specific examples of which include an electro-mechanical conversion method (examples: single cavity type, double cavity type, bender type, piston type, shear mode type, shared wall type, and the like), an electrothermal conversion method (examples: thermal inkjet type, Bubble Jet [registered trademark] type, and the like), an electrostatic attraction method (examples: electrolysis control type, slit jet type, and the like), an acoustic inkjet method, and an electric discharge method (examples: spark jet type, and the like). Note that there are no particular limitations on the shape and the like of the nozzles used when recording is carried out according to the inkjet method, and these can be selected as appropriate according to the purpose.

The droplet amount of aqueous ink discharged from the inkjet head is preferably 0.2 to 50 picoliters (pL), and more preferably 1 to 30 picoliters (pL), from the viewpoint of the significant drying load reduction effect and improved image quality.

2. Printed Item

The printed item of one embodiment is obtained by printing using an aqueous ink on a recording medium. The recording medium on which the aqueous ink is printed is not particularly limited, and, for example, the following can be used: paper substrates such as high-quality paper, coated paper, art paper, cast paper, and synthetic paper; plastic substrates such as polycarbonate, rigid PVC, soft PVC, polystyrene, styrene foam, PMMA, polypropylene, polyethylene, and PET; metal substrates such as aluminum and stainless steel; glass substrates; wood; and the like. Aqueous ink can be suitably used not only on paper substrates such as specialty paper having an absorbent layer and copy paper, but also on low-absorption substrates such as coated paper and art paper commonly used in existing printing markets, as well as on plastic substrates.

The present invention is related to the subject matter of Japanese Patent Application No. 2020-038302 filed on March 6, 2020, the entire content of which is incorporated herein by reference.

EXAMPLES

Embodiments of the present invention are described below in further detail using examples and comparative examples. Note that in the following description "part", "%", and "ratio" are based on mass unless specifically stated otherwise.

< 1. Preparation of Pigment Dispersion>

The pigments used in the preparation of pigment dispersions are as follows.

- · HOSTAPERM BLUE BT617D (manufactured by Clariant)
- · Inkjet Magenta E7B (manufactured by Clariant)
- · Inkjet Yellow 4GC (manufactured by Clariant)
- · NIPex 160 IQ (manufactured by Orion Engineered Carbons)

Furthermore, the water-soluble resins used as dispersing resins in the preparation of pigment dispersions are as follows.

- · BYKJET-9151 (resin-type dispersant manufactured by BYK-Chemie Japan K.K.)
- · BYKJET-9152 (resin-type dispersant manufactured by BYK-Chemie Japan K.K.)

Furthermore, the anti-foaming agent used in the preparation of pigment dispersions is as follows.

- · BYK-019 (manufactured by BYK-Chemie Japan K.K.)

(Aqueous Dispersion of Resin-Dispersed Cyan Pigment)

As a pigment, 20 parts of HOSTAPERM BLUE BT617D, 8 parts of BYKJET-9151, 0.8 parts of BYK-019, and 71.2 parts of water were subjected to preliminary dispersion in a stirrer, and then subjected to main dispersion for 2 hours using a Dyno Mill having a volume of 0.6 L and filled with 1800 g of zirconia beads having a diameter of 0.5 mm. The pigment concentration was then adjusted to 10% by dilution with water, and an aqueous dispersion of a resin-dispersed cyan pigment was obtained.

(Aqueous Dispersion of Resin-Dispersed Magenta Pigment)

As a pigment, 20 parts of Inkjet Magenta E7B, 12 parts of BYKJET-9152, 0.8 parts of BYK-019, and 67.2 parts of water were subjected to preliminary dispersion in a stirrer, and then subjected to main dispersion for 2 hours using a Dyno Mill having a volume of 0.6 L and filled with 1800 g of zirconia beads having a diameter of 0.5 mm. The pigment concentration was then adjusted to 10% by dilution with water, and an aqueous dispersion of a resin-dispersed magenta pigment was obtained.

(Aqueous Dispersion of Resin-Dispersed Yellow Pigment)

As a pigment, 20 parts of Inkjet Yellow 4GC, 10 parts of BYKJET-9152, 0.8 parts of BYK-019, and 69.2 parts of water were subjected to preliminary dispersion in a stirrer, and then subjected to main dispersion for 2 hours using a Dyno Mill having a volume of 0.6 L and filled with 1800 g of zirconia beads having a diameter of 0.5 mm. The pigment concentration was then adjusted to 10% by dilution with water, and an aqueous dispersion of a resin-dispersed yellow pigment was obtained.

(Aqueous Dispersion of Resin-Dispersed Black Pigment (Carbon Black))

As a pigment, 20 parts of NIPex 160 IQ, 8 parts of BYKJET-9151, 0.8 parts of BYK-019, and 71.2 parts of water were subjected to preliminary dispersion in a stirrer, and then subjected to main dispersion for 2 hours using a Dyno Mill having a volume of 0.6 L and filled with 1800 g of zirconia beads having a diameter of 0.5 mm. The pigment concentration was then adjusted to 15% by dilution with water, and an aqueous dispersion of a resin-dispersed black pigment (carbon black) was obtained.

In the examples described later, the aqueous dispersion of a resin-dispersed cyan pigment, the aqueous dispersion of a resin-dispersed magenta pigment, the aqueous dispersion of a resin-dispersed yellow pigment, and the aqueous dispersion of a resin-dispersed black pigment (carbon black) are used as a "set of resin-dispersed pigment dispersions". Furthermore, besides these, the following pigment dispersions were prepared and used as sets.

(Set of Self-Dispersing Pigment Dispersions)

· CAB-O-JET 250C: manufactured by Cabot Corporation, aqueous dispersion of self-dispersing cyan pigment, pigment concentration 10%
· CAB-O-JET 265M: manufactured by Cabot Corporation, aqueous dispersion of self-dispersing magenta pigment, 10% pigment concentration
· CAB-O-JET 470Y: manufactured by Cabot Corporation, aqueous dispersion of self-dispersing yellow pigment, pigment concentration 15%
· CAB-O-JET 352K: manufactured by Cabot Corporation, aqueous dispersion of self-dispersing carbon black, pigment concentration 15%

(Set of Water-Insoluble Resin Coated Pigment Dispersions)

· Pro-Jet [registered trademark] Cyan ADP 2000: manufactured by FUJIFILM Corporation, aqueous dispersion of cyan pigment coated with water-insoluble resin, pigment concentration 14%
· Pro-Jet [registered trademark] Magenta ADP 1100: manufactured by FUJIFILM Corporation, aqueous dispersion of magenta pigment coated with water-insoluble resin, pigment concentration 14%
· Pro-Jet [registered trademark] Yellow APD 1000LF: manufactured by FUJIFILM Corporation, aqueous dispersion of yellow pigment coated with water-insoluble resin, pigment concentration 15%
· Pro-Jet [registered trademark] Black APD 1001: manufactured by FUJIFILM Corporation, aqueous dispersion of carbon black coated with water-insoluble resin, pigment concentration 14%

<2. Preparation of (Meth)Acrylic Resin>

(Synthesis of (Meth)Acrylic Resin A)

A reaction container equipped with a gas inlet tube, a thermometer, a condenser, and a stirrer was charged with 80 parts of butanol and flushed with nitrogen gas. After heating the inside of the reaction container to 80°C, a mixture of: 10 parts of the compound represented by general formula (3) described later in which n ≒ 8, 60 parts of methoxy polyethylene glycol #400 methacrylate, and 30 parts of 2-ethylhexyl acrylate as an ethylenic unsaturated monomer; 2 parts of V-601 (manufactured by FUJIFILM Wako Pure Chemical Corporation) as a polymerization initiator; and 7.5 parts of n-dodecyl mercaptan as a chain transfer agent was added dropwise over 4 hours, and a polymerization reaction was carried out. Following completion of the dropwise addition, the reaction was continued at 100°C for 1 hour, after which 0.5 parts of V-601 was added, and the reaction was continued at 100°C for another 1 hour. Then, after cooling to room temperature, 100 parts of water was added and the resulting mixture was stirred. The mixture was then heated to 100°C or higher, and the butanol was removed by azeotropic distillation with water, after which the solid content was adjusted to 30%, thereby obtaining an aqueous solution of (meth)acrylic resin A with a solid content of 30% (a solution containing a solvent containing water, and components dispersed and/or dissolved in the solvent). Note that the (meth)acrylic resin A was water soluble, and the weight average molecular weight of the (meth)acrylic resin A was 3,000 as measured according to the aforementioned method.

(Synthesis of (Meth)Acrylic Resins B and C)

A reaction container equipped with a gas inlet tube, a thermometer, a condenser, and a stirrer was charged with 80 parts of butanol and flushed with nitrogen gas. After heating the inside of the reaction container to 80°C, a mixture of: 10 parts of the compound represented by general formula (3) described later in which n ≒ 8, 60 parts of methoxy polyethylene glycol #400 methacrylate, and 30 parts of 2-ethylhexyl acrylate as an ethylenic unsaturated monomer; and 18 parts of V-601 (FUJIFILM Wako Pure Chemical Corporation) as a polymerization initiator was added dropwise over 4 hours, and a polymerization reaction was carried out. Following completion of the dropwise addition, the reaction was continued at 100°C for 1 hour, after which 1.5 parts of V-601 was added, and the reaction was continued at 100°C for another 1 hour. Then, after cooling to room temperature, 100 parts of water was added and the resulting mixture was stirred. The mixture was then heated to 100°C or higher, and the butanol was removed by azeotropic distillation with water, after which the solid content was adjusted to 30%, thereby obtaining an aqueous solution of (meth)acrylic resin B having a solid content of 30%. Note that the (meth)acrylic resin B was water soluble, and the weight average molecular weight of the (meth)acrylic resin B was 8,500 as measured according to the aforementioned method.

Furthermore, an aqueous solution of (meth)acrylic resin C having a solid content of 30% was obtained by performing synthesis according to the same method as for the (meth)acrylic resin B except that the amount of V-601 contained in the mixture was 10 parts in the synthesis of the (meth)acrylic resin B mentioned above. The (meth)acrylic

resin C was water soluble, and the weight average molecular weight of the (meth)acrylic resin C was 19,000 as measured according to the aforementioned method.

(Synthesis of (Meth)Acrylic Resin D)

An aqueous solution of (meth)acrylic resin D having a solid content of 30% was obtained by performing synthesis according to the same method as for the (meth)acrylic resin B except that the ethylenic unsaturated monomer contained in the mixture was 2 parts of the compound represented by general formula (3) described below in which n ≒ 58, 60 parts of methoxy polyethylene glycol #400 methacrylate, and 38 parts of butyl methacrylate in the synthesis of the (meth)acrylic resin B mentioned above. The (meth)acrylic resin D was water soluble, and the weight average molecular weight of the (meth)acrylic resin D was 8,000 as measured according to the aforementioned method.

[Chemical formula 2]

[General formula (3)]

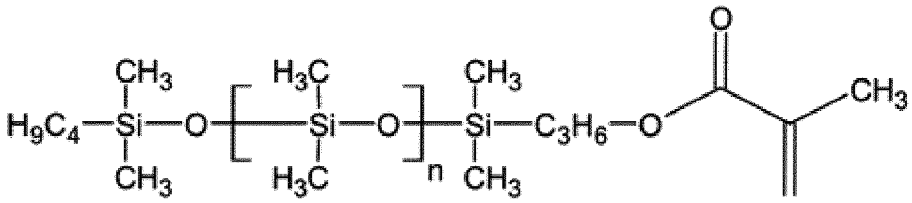

<3. Preparation of Four-Color Set of Aqueous Inks (Cyan, Magenta, Yellow, and Black)>

(Example 1)

Amounts of 40 parts of the aqueous dispersion of the resin-dispersed cyan pigment, 30 parts of glycerol, 2 parts of BYK-3565 (details described later), 3 parts of BYK-348 (details described later), 1 part of triethanolamine (pH adjuster), and 24 parts of water were weighed, then sequentially introduced into a mixing container, and stirred with a stirrer until sufficiently uniform. The resulting mixed liquid was then filtered through a membrane filter to remove coarse particles that cause head blockages, thereby obtaining a cyan aqueous ink 1. The viscosity of this aqueous ink was 7 mPa·s. Furthermore, a magenta aqueous ink 1, a yellow aqueous ink 1, and a black aqueous ink 1 were prepared in the same manner to the cyan aqueous ink 1 except that the aqueous dispersion of the resin-dispersed cyan pigment was changed to the aqueous dispersion of the resin-dispersed magenta pigment, the aqueous dispersion of the resin-dispersed yellow pigment, and the aqueous dispersion of the resin-dispersed black pigment (carbon black), respectively. These four color aqueous inks were then used as a set for an evaluation described later.

(Examples 2 to 47 and Comparative Examples 1 to 20)

Four-color sets of aqueous inks (cyan, magenta, yellow, and black) were prepared according to the same method as for Example 1 according to the compositions of pigment dispersions, resins, wetting agents, surfactants, pH adjusters, and water given in Tables 1 to 7.

[Table 1]

Table 1

| | Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Set of Resin-dispersed Pigment Dispersion | 40.0% | 40.0% | 40.0% | 40.0% | 40.0% | 40.0% | 40.0% | 40.0% | 40.0% | 40.0% | 40.0% | 40.0% | 40.0% |

(continued)

| | | | | Example | | | | | | | | | | | | |
|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 |
| Wetting Agent | Polyhydric Alcohol (A) | glycerin | SP value: 14.9 | 30.0% | | | | | | | | | | | | |
| | | ethylene glycol | SP value: 14.7 | | 30.0% | | | | | | | | | | | |
| | | 1,3-propanediol | SP value: 13.3 | | | 30.0% | | | | | | | | | | |
| | | 1,2-propanediol | SP value: 12.6 | | | | 30.0% | | | | | | | | | |
| | | 2-methyl-1,3-propanediol | SP value: 12.0 | | | | | 30.0% | | | | | | | | |
| | | 1,4-butanediol | SP value: 12.3 | | | | | | 30.0% | | | | | | | |
| | | 1,3-butanediol | SP value: 11.8 | | | | | | | 30.0% | | | | | | |
| | | 1,2-butanediol | SP value: 11.5 | | | | | | | | 30.0% | | 30.0% | 30.0% | 20.0% | 25.0% |
| | | 2,3-butanediol | SP value: 11.3 | | | | | | | | | 30.0% | | | | |
| | Other Wetting Agent | triethylene glycol | SP value: 10.9 | | | | | | | | | | | | | |
| | | 1,2-hexanediol | SP value: 10.3 | | | | | | | | | | | | 10.0% | 5.0% |
| | | 1,2-heptanediol | SP value: 10.3 | | | | | | | | | | | | | |
| | | dipropylene glycol | SP value: 10.2 | | | | | | | | | | | | | |
| | | 2-ethyl-1,3-hexanediol | SP value: 9.5 | | | | | | | | | | | | | |
| | | diethylene glycol monobutyl ether | SP value: 8.9 | | | | | | | | | | | | | |

(continued)

| | | | Example 1 | 2 | 3 | 4 | 5 | 6 | 7 | 8 | 9 | 10 | 11 | 12 | 13 |
|---|---|---|---|---|---|---|---|---|---|---|---|---|---|---|---|
| Surfactant | BYK-348 | Nv100% | 3.0% | 3.0% | 3.0% | 3.0% | 3.0% | 3.0% | 3.0% | 3.0% | 3.0% | | 3.0% | 3.0% | 3.0% |
| | TEGO Glide 440 | Nv100% | | | | | | | | | | 3.0% | | | |
| | Compound represented by general formula (2) | Nv100% | | | | | | | | | | | | | |
| Resin / (Meth) acrylic Resin (B) | BYK-3565 | Nv100% | 2.0% | 2.0% | 2.0% | 2.0% | 2.0% | 2.0% | 2.0% | 2.0% | 2.0% | 2.0% | 1.0% | 2.0% | 2.0% |
| Resin / Other Resin | BYK-3550 | Nv100% | | | | | | | | | | | | | |
| | Joncryl HPD496 | Nv34% | | | | | | | | | | | | | |
| | Joncryl HPD 96-E | Nv34% | | | | | | | | | | | 3.0% | | |
| | PTFE D-210 | Nv60% | | | | | | | | | | | | | |
| pH Adjuster | triethanolamine | | 1.0% | 1.0% | 1.0% | 1.0% | 1.0% | 1.0% | 1.0% | 1.0% | 1.0% | 1.0% | 1.0% | 1.0% | 1.0% |
| Ion-exchanged Water | | | 24.0% | 24.0% | 24.0% | 24.0% | 24.0% | 24.0% | 24.0% | 24.0% | 24.0% | 24.0% | 22.0% | 24.0% | 24.0% |
| Ratio of Polyhydric Alcohol (A) to total Wetting Agent | | | 100.0% | 100.0% | 100.0% | 100.0% | 100.0% | 100.0% | 100.0% | 100.0% | 100.0% | 100.0% | 100.0% | 66.7% | 83.3% |
| Amount and ratio of Polyhydric Alcohol (A) and (Meth)acrylic Resin (B) | blend amount of Polyhydric Alcohol (A) | | 30.0% | 30.0% | 30.0% | 30.0% | 30.0% | 30.0% | 30.0% | 30.0% | 30.0% | 30.0% | 30.0% | 20.0% | 25.0% |
| | blend amount of (Meth) acrylic Resin (B) | | 2.0% | 2.0% | 2.0% | 2.0% | 2.0% | 2.0% | 2.0% | 2.0% | 2.0% | 2.0% | 1.0% | 2.0% | 2.0% |
| | (A)/(8) | | 15 | 15 | 15 | 15 | 15 | 15 | 15 | 15 | 15 | 15 | 30 | 10 | 12.5 |
| Fluorine Atom Content (mass ppm) | | | 0 | 0 | 0 | 0 | 0 | 0 | 0 | 0 | 0 | 0 | 0 | 0 | 0 |

(continued)

| | | | Example | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Evaluation Result | Evaluation 1 | Image Quality Evaluation Test | C | C | C | B | B | C | B | B | B | C | A | B | A |
| | Evaluation 2 | Long-Term Clogging Reliability Test | A | A | A | A | B | A | B | c | B | B | C | C | B |
| | Evaluation 3 | Printing Stability Test | A | A | A | A | B | B | B | B | B | B | B | C | C |
| | Evaluation 4 | Printed Item Drying Properties Test | C | C | C | B | B | c | B | B | B | B | A | B | A |
| | Evaluation 5 | Ink Storage Stability Test | A | A | A | A | A | A | B | A | B | B | B | B | A |

[Table 2]

Table 2

| | Example | | | | Comparative Example | | | | | | | |
|---|---|---|---|---|---|---|---|---|---|---|---|---|
| | 14 | 15 | 16 | 17 | 1 | 2 | 3 | 4 | 5 | 6 | 7 | 8 |
| Set of Resin-dispersed Pigment Dispersion | 40.0% | 40.0% | 40.0% | 40.0% | 40.0% | 40.0% | 40.0% | 40.0% | 40.0% | 40.0% | 40.0% | 40.0% |

(continued)

| | | | | Example | | | | Comparative Example | | | | | | | |
|---|---|---|---|---|---|---|---|---|---|---|---|---|---|---|---|
| | | | | 14 | 15 | 16 | 17 | 1 | 2 | 3 | 4 | 5 | 6 | 7 | 8 |
| Wetting Agent | Polyhydric Alcohol (A) | glycerin | SP value: 14.9 | | | | | | | | | | | | |
| | | ethylene glycol | SP value: 14.7 | | | | | | | | | | | | |
| | | 1,3-propanediol | SP value : 13.3 | | | | | | | | | | | | |
| | | 1,2-propanediol | SP value: 12.6 | | | | | | | | | | | | |
| | | 2-methyl-1,3-propanediol | SP value: 12.0 | | | | | | | | | | | | |
| | | 1,4-butanediol | SP value : 12.3 | | | | | | | | | | | | |
| | | 1,3-butanediol | SP value : 11.8 | | | | | | | | | | | 15.0% | 15.0% |
| | | 1,2-butanediol | SP value : 11.5 | 30.0% | 15.0% | 1.0% | 0.6% | | | | | | | | |
| | | 2,3-butanediol | SP value : 11.3 | | | | | | | | | | | | |
| | Other Wetting Agent | triethylene glycol | SP value: 10.9 | | | | | 30.0% | | | | | | | |
| | | 1,2-hexanediol | SP value : 10.3 | | | | | | 30.0% | | | | | 15.0% | |
| | | 1,2-heptanediol | SP value : 10.3 | | | | | | | 30.0% | | | | | |
| | | dipropylene glycol | SP value: 10.2 | | | | | | | | 30.0% | | | | |
| | | 2-ethyl-1,3-hexanediol | SP value: 9.5 | | | | | | | | | 30.0% | | | |
| | | diethylene glycol monobutyl ether | SP value: 8.9 | | | | 0.4% | | | | | | 30.0% | | 15.0% |

(continued)

| | | | | Example | | | | Comparative Example | | | | | | | |
|---|---|---|---|---|---|---|---|---|---|---|---|---|---|---|---|
| | | | | 14 | 15 | 16 | 17 | 1 | 2 | 3 | 4 | 5 | 6 | 7 | 8 |
| Surfactant | | BYK-348 | Nv100% | 3.0% | 3.0% | 3.0% | 3.0% | 3.0% | 3.0% | 3.0% | 3.0% | 3.0% | 3.0% | 3.0% | 3.0% |
| | | TEGO Glide 440 | Nv100% | | | | | | | | | | | | |
| | | Compound represented by general formula (2) | Nv100% | | | | | | | | | | | | |
| Resin | (Meth) acrylic Resin (B) | BYK-3565 | Nv100% | 0.1% | 0.01% | 0.01% | 0.01% | 2.0% | 2.0% | 2.0% | 2.0% | 2.0% | 2.0% | 2.0% | 2.0% |
| | Other Resin | BYK-3550 | Nv100% | | | | | | | | | | | | |
| | | Joncryl HPD496 | Nv34% | | | | | | | | | | | | |
| | | Joncryl HPD 96-E | Nv34% | | | | | | | | | | | | |
| | | PTFE D-210 | Nv60% | | | | | | | | | | | | |
| pH Adjuster | | triethanolamine | | 1.0% | 1.0% | 1.0% | 1.0% | 1.0% | 1.0% | 1.0% | 1.0% | 1.0% | 1.0% | 1.0% | 1.0% |
| Ion-exchanged Water | | | | 25.9% | 40.99% | 54.99% | 54.99% | 24.0% | 24.0% | 24.0% | 24.0% | 24.0% | 24.0% | 24.0% | 24.0% |
| Ratio of Polyhydric Alcohol (A) to total Wetting Agent | | | | 100.0% | 100.0% | 100.0% | 60.0% | 0.0% | 0.0% | 0.0% | 0.0% | 0.0% | 0.0% | 50.0% | 50.0% |
| Amount and ratio of Polyhydric Alcohol (A) and (Meth)acrylic Resin (B) | | blend amount of Polyhydric Alcohol (A) | | 30.0% | 15.0% | 1.0% | 0.6% | 0.0% | 0.0% | 0.0% | 0.0% | 0.0% | 0.0% | 15.0% | 15.0% |
| | | blend amount of (Meth) acrylic Resin (B) | | 0.1% | 0.01% | 0.01% | 0.01% | 2.0% | 2.0% | 2.0% | 2.0% | 2.0% | 2.0% | 2.0% | 2.0% |
| | | (A)/(8) | | 300 | 1500 | 100 | 60 | 0 | 0 | 0 | 0 | 0 | 0 | 7.5 | 7.5 |
| Fluorine Atom Content (mass ppm) | | | | 0 | 0 | 0 | 0 | 0 | 0 | 0 | 0 | 0 | 0 | 0 | 0 |

(continued)

| | | | Example | | | | Comparative Example | | | | | | | |
|---|---|---|---|---|---|---|---|---|---|---|---|---|---|---|
| | | | 14 | 15 | 16 | 17 | 1 | 2 | 3 | 4 | 5 | 6 | 7 | 8 |
| Evaluation Result | Evaluation 1 | Image Quality Evaluation Test | A | B | B | B | D | D | D | D | D | D | D | D |
| | Evaluation 2 | Long-Term Clogging Reliability Test | B | B | C | C | C | D | D | C | D | D | D | D |
| | Evaluation 3 | Printing Stability Test | B | B | B | C | D | D | D | C | D | D | D | D |
| | Evaluation 4 | Printed Item Drying Properties Test | B | C | A | A | D | C | D | B | D | D | C | B |
| | Evaluation 5 | Ink Storage Stability Test | A | A | A | A | C | D | D | D | D | D | D | D |

[Table 3]

Table 3

| | | | Comparative Example | | | | | | | | | | | |
|---|---|---|---|---|---|---|---|---|---|---|---|---|---|---|
| | | | 9 | 10 | 11 | 12 | 13 | 14 | 15 | 16 | 17 | 18 | 19 | 20 |
| Set of Resin-dispersed Pigment Dispersion | | | 40.0% | 40.0% | 40.0% | 40.0% | 40.0% | 40.0% | 40.0% | 40.0% | 40.0% | 40.0% | 40.0% | 40.0% |
| Wetting Agent | Polyhydric Alcohol (A) | glycerin | SP value : 14.9 | | | | | | | | | | | |
| | | ethylene glycol | SP value : 14.7 | | | | | | | | | | | |
| | | 1,3-propanediol | SP value : 13.3 | | | | | | | | | | | |
| | | 1,2-propanediol | SP value : 12.6 | | | | | | | | | | | |
| | | 2-methyl-1,3-propanediol | SP value : 12.0 | | | | | | | | | | | |
| | | 1,4-butanediol | SP value : 12.3 | | | | | | | | | | | |
| | | 1,3-butanediol | SP value : 11.8 | 30.0% | 30.0% | 30.0% | 30.0% | 30.0% | 30.0% | 30.0% | 30.0% | 0.4% | 30.0% | 30.0% | 30.0% |
| | | 1,2-butanediol | SP value: 11.5 | | | | | | | | | | | |
| | | 2,3-butanediol | SP value: 11.3 | | | | | | | | | | | |
| | | triethylene glycol | SP value : 10.9 | | | | | | | | | | | |

(continued)

| | | | Comparative Example | | | | | | | | | | | |
|---|---|---|---|---|---|---|---|---|---|---|---|---|---|---|
| | | | 9 | 10 | 11 | 12 | 13 | 14 | 15 | 16 | 17 | 18 | 19 | 20 |
| Other Wetting Agent | 1,2-hexanediol | SP value : 10.3 | | | | | | | | | | | | |
| | 1,2-heptanediol | SP value : 10.3 | | | | | | | | | | | | |
| | dipropylene glycol | SP value : 10.2 | | | | | | | | | | | | |
| | 2-ethyl-1,3-hexanediol | SP value: 9.5 | | | | | | | | | | | | |
| | diethylene glycol monobutyl ether | SP value: 8.9 | | | | | | | | | 0.6% | | | |
| Surfactant | BYK-348 | Nv100% | | 3.0% | 3.0% | 3.0% | 3.0% | 3.0% | 3.0% | | | 3.0% | | 3.0% |
| | TEGO Glide 440 | Nv100% | | | | | | | 2.0% | 3.0% | 3.0% | | | |
| | Compound represented by general formula (2) | Nv100% | | | | | | | | | | | 1.0% | |

(continued)

| | | | | Comparative Example | | | | | | | | | | | |
|---|---|---|---|---|---|---|---|---|---|---|---|---|---|---|---|
| | | | | 9 | 10 | 11 | 12 | 13 | 14 | 15 | 16 | 17 | 18 | 19 | 20 |
| Resin | (Meth) acrylic Resin (B) | BYK-3565 | Nv100% | 2.0% | | 0.01% | 5.5% | | | | | | | 2.0% | |
| | Other Resin | BYK-3550 | Nv100% | | | | | | | | | | 2.0% | | |
| | | Joncryl HPD496 | Nv34% | | | | | 2.0% | | | 2.0% | 2.0% | | | |
| | | Joncryl HPD 96-E | Nv34% | | | | | | 2.0% | | | | | | |
| | | PTFE D-210 | Nv60% | | | | | | | | | | | | 2.0% |
| pH Adjuster | | triethanolamine | | 1.0% | 1.0% | 1.0% | 1.0% | 1.0% | 1.0% | 1.0% | 1.0% | 1.0% | 1.0% | 1.0% | 1.0% |
| Ion-exchanged Water | | | | 27.0% | 26.0% | 25.99% | 20.5% | 24.0% | 24.0% | 24.0% | 24.0% | 53.0% | 24.0% | 26.0% | 24.0% |
| Ratio of Polyhydric Alcohol (A) to total Wetting Agent | | | | 100.0% | 100.0% | 100.0% | 100.0% | 100.0% | 100.0% | 100.0% | 100.0% | 40.0% | 100.0% | 100.0% | 100.0% |
| Amount and ratio of Polyhydric Alcohol (A) and (Meth)acrylic Resin (B) | | blend amount of Polyhydric Alcohol (A) | | 30.0% | 30.0% | 30.0% | 30.0% | 30.0% | 30.0% | 30.0% | 30.0% | 0.4% | 30.0% | 30.0% | 30.0% |
| | | blend amount of (Meth) acrylic Resin (B) | | 2.0% | 0.0% | 0.01% | 5.5% | 0.0% | 0.0% | 0.0% | 0.0% | 0.0% | 0.0% | 2.0% | 0.0% |
| | | (A)/(B) | | 15 | --- | 3000 | 5 | --- | --- | --- | --- | --- | --- | 15 | --- |
| Fluorine Atom Content (mass ppm) | | | | 0 | 0 | 0 | 0 | 0 | 0 | 0 | 0 | 0 | 0 | 1379 | 8572 |

(continued)

| | | | Comparative Example | | | | | | | | | | | |
|---|---|---|---|---|---|---|---|---|---|---|---|---|---|---|
| | | | 9 | 10 | 11 | 12 | 13 | 14 | 15 | 16 | 17 | 18 | 19 | 20 |
| Evaluation Result | Evaluation 1 | Image Quality Evaluation Test | D | D | C | C | D | D | D | D | D | C | D | D |
| | Evaluation 2 | Long-Term Clogging Reliability Test | C | C | B | D | C | C | C | D | D | D | C | D |
| | Evaluation 3 | Printing Stability Test | D | D | D | D | D | D | D | D | D | B | D | D |
| | Evaluation 4 | Printed Item Drying Properties Test | C | C | C | C | B | B | C | B | B | B | B | B |
| | Evaluation 5 | Ink Storage Stability Test | C | C | C | D | D | D | C | D | D | C | C | B |

[Table 4]

Table 4

| | | | | Example | | | | | | | | | |
|---|---|---|---|---|---|---|---|---|---|---|---|---|---|
| | | | | 18 | 19 | 20 | 21 | 22 | 23 | 24 | 25 | 26 | 27 |
| Set of Resin-dispersed Pigment Dispersion | | | | 40.0% | 40.0% | 40.0% | 40.0% | 40.0% | 40.0% | 40.0% | 40.0% | 40.0% | 40.0% |
| Wetting Agent | Polyhydric Alcohol (A) | glycerin | SP value: 14.9 | | | | | | | | | 5.0% | 2.0% |
| | | 1,2-propanediol | SP value: 12.6 | | | | | | | | | | |
| | | 1,3-butanediol | SP value: 11.8 | 30.0% | 30.0% | 30.0% | 40.0% | 45.0% | 30.0% | 30.0% | 30.0% | 30.0% | 30.0% |
| | | 1,2-butanediol | SP value: 11.5 | | | | | | | | | | |
| | Other Wetting Agent | 1,2-hexanediol | SP value: 10.3 | | | | | | | | | | |
| | | 1,2-pentanediol | SP value: 10.8 | | | | | | | | | | |
| | | diethylene glycol monobutyl ether | SP value: 8.9 | | | | | | | | | | |
| Surfactant | | BYK-348 | Nv100% | | | 3.0% | 3.0% | 3.0% | 3.0% | 3.0% | 3.0% | 3.0% | 3.0% |
| | | Compound represented by general formula (2) | Nv100% | 0.2% | | | | | | | | | |
| | | Surfynol 104E | Nv50% | | 3.0% | 1.0% | 1.0% | 1.0% | 1.0% | 1.0% | 1.0% | 1.0% | 1.0% |
| Resin | (Meth)acrylic Resin (B) | BYK-3565 | Nv100% | 2.0% | 2.0% | 2.0% | 2.0% | 2.0% | 5.0% | 0.5% | 0.1% | 0.5% | 0.5% |
| | Other Resin | JE-1056 | Nv42.5% | | | | | | | | | | |
| | | AQUACER 515 | Nv35% | | | | | | | | | | |

(continued)

| | | | Example | | | | | | | | | |
|---|---|---|---|---|---|---|---|---|---|---|---|---|
| | | | 18 | 19 | 20 | 21 | 22 | 23 | 24 | 25 | 26 | 27 |
| pH Adjuster | | triethanolamine | 1.0% | 1.0% | 1.0% | 1.0% | 1.0% | 1.0% | 1.0% | 1.0% | 1.0% | 1.0% |
| Ion-exchanged Water | | | 26.8% | 24.0% | 23.0% | 13.0% | 8.0% | 20.0% | 24.5% | 25.0% | 19.5% | 22.5% |
| Ratio of Polyhydric Alcohol (A) to total Wetting Agent | | | 100.0% | 100.0% | 100.0% | 100.0% | 100.0% | 100.0% | 100.0% | 100.0% | 100.0% | 100.0% |
| Amount and ratio of Polyhydric Alcohol (A) and (Meth)acrylic Resin (B) | | blend amount of Polyhydric Alcohol (A) | 30.0% | 30.0% | 30.0% | 40.0% | 45.0% | 30.0% | 30.0% | 30.0% | 35.0% | 32.0% |
| | | blend amount of (Meth) acrylic Resin (B) | 2.0% | 2.0% | 2.0% | 2.0% | 2.0% | 5.0% | 0.5% | 0.1% | 0.5% | 0.5% |
| | | (A)/(B) | 15 | 15 | 15 | 20 | 22.5 | 6 | 60 | 600 | 70 | 64 |
| Fluorine Atom Content (mass ppm) | | | 276 | 0 | 0 | 0 | 0 | 0 | 0 | 0 | 0 | 0 |
| Evaluation Result | Evaluation 1 | Image Quality Evaluation Test | C | A | A | A | A | B | A | B | B | B |
| | Evaluation 2 | Long-Term Clogging Reliability Test | B | C | B | B | C | B | A | A | A | A |
| | Evaluation 3 | Printing Stability Test | C | C | B | B | B | A | A | A | A | A |
| | Evaluation 4 | Printed Item Drying Properties Test | C | B | C | C | C | C | C | C | C | C |
| | Evaluation 5 | Ink Storage Stability Test | B | C | B | B | C | C | A | A | A | A |

[Table 5]

Table 5

| | | | | Example | | | | | | | | | | |
|---|---|---|---|---|---|---|---|---|---|---|---|---|---|---|
| | | | | 28 | 29 | 30 | 31 | 32 | 33 | 34 | 35 | 36 | 37 | 38 |
| Set of Resin-dispersed Pigment Dispersion | | | | 40.0% | 40.0% | 40.0% | 40.0% | 40.0% | 40.0% | 40.0% | 40.0% | 40.0% | 40.0% | 40.0% |
| Wetting Agent | Polyhydric Alcohol (A) | glycerin | SP value : 14.9 | | | | | | | | | | | |
| | | 1,2-propanediol | SP value : 12.6 | 5.0% | | | | | | | | | | |
| | | 1,3-butanediol | SP value : 11.8 | 30.0% | 30.0% | 25.0% | 30.0% | 30.0% | 30.0% | 30.0% | 30.0% | 30.0% | 30.0% | 30.0% |
| | | 1,2-butanediol | SP value : 11.5 | | 5.0% | | | | | | | | | |
| | Other Wetting Agent | 1,2-hexanediol | SP value: 10.3 | | | 10.0% | 5.0% | 2.0% | | | | | | |
| | | 1,2-pentanediol | SP value : 10.8 | | | | | | 5.0% | 2.0% | | | | |
| | | diethylene glycol monobutyl ether | SP value: 8.9 | | | | | | | | 3.0% | 2.0% | | |
| Surfactant | | BYK-348 | Nv100% | 3.0% | 3.0% | 3.0% | 3.0% | 3.0% | 3.0% | 3.0% | 3.0% | 3.0% | 3.0% | 3.0% |
| | | Compound represented by general formula (2) | Nv100% | | | | | | | | | | | |
| | | Surfynol 104E | Nv50% | 1.0% | 1.0% | 1.0% | 1.0% | 1.0% | 1.0% | 1.0% | 1.0% | 1.0% | 1.0% | 1.0% |
| Resin | (Meth)acrylic Resin (B) | BYK-3565 | Nv100% | 0.5% | 0.5% | 0.5% | 0.5% | 0.5% | 0.5% | 0.5% | 0.5% | 0.5% | 0.5% | 0.5% |
| | Other Resin | JE-1056 | Nv42.5% | | | | | | | | | | 9.4% | |
| | | AQUACER 515 | Nv35% | | | | | | | | | | | 3.3% |

(continued)

| | | | Example | | | | | | | | | | |
|---|---|---|---|---|---|---|---|---|---|---|---|---|---|
| | | | 28 | 29 | 30 | 31 | 32 | 33 | 34 | 35 | 36 | 37 | 38 |
| pH Adjuster | | triethanolamine | 1.0% | 1.0% | 1.0% | 1.0% | 1.0% | 1.0% | 1.0% | 1.0% | 1.0% | 1.0% | 1.0% |
| Ion-exchanged Water | | | 19.5% | 19.5% | 19.5% | 19.5% | 22.5% | 19.5% | 22.5% | 21.5% | 22.5% | 15.1% | 21.2% |
| Ratio of Polyhydric Alcohol (A) to total Wetting Agent | | | 100.0% | 100.0% | 71.4% | 85.7% | 93.8% | 85.7% | 93.8% | 90.9% | 93.8% | 100.0% | 100.0% |
| Amount and ratio of Polyhydric Alcohol (A) and (Meth)acrylic Resin (B) | | blend amount of Polyhydric Alcohol (A) | 35.0% | 35.0% | 25.0% | 30.0% | 30.0% | 30.0% | 30.0% | 30.0% | 30.0% | 30.0% | 30.0% |
| | | blend amount of (Meth) acrylic Resin (B) | 0.5% | 0.5% | 0.5% | 0.5% | 0.5% | 0.5% | 0.5% | 0.5% | 0.5% | 0.5% | 0.5% |
| | | (A)/(B) | 70 | 70 | 50 | 60 | 60 | 60 | 60 | 60 | 60 | 60 | 60 |
| Fluorine Atom Content (mass ppm) | | | 0 | 0 | 0 | 0 | 0 | 0 | 0 | 0 | 0 | 0 | 0 |
| Evaluation Result | Evaluation 1 | Image Quality Evaluation Test | A | A | B | B | A | B | A | B | A | A | A |
| | Evaluation 2 | Long-Term Clogging Reliability Test | A | A | B | A | A | B | B | C | B | A | A |
| | Evaluation 3 | Printing Stability Test | A | A | B | B | A | B | B | B | A | A | A |
| | Evaluation 4 | Printed Item Drying Properties Test | C | B | C | B | B | C | B | B | B | A | A |
| | Evaluation 5 | Ink Storage Stability Test | A | A | B | A | A | B | A | B | A | A | A |

[Table 6]

Table 6

| | | | | Example 39 | Example 40 | Example 41 | Example 42 | Example 43 |
|---|---|---|---|---|---|---|---|---|
| Pigment Dispersion | | Set of Resin-dispersed Pigment Dispersion | | | | 40.0% | | |
| Pigment Dispersion | | Set of Self-Dispersing Pigment Dispersion | | 40.0% | | | 40.0% | |
| Pigment Dispersion | | Set of Water-Insoluble Resin Coated Pigment Dispersion | | | 40.0% | | | 40.0% |
| Wetting Agent | Polyhydric Alcohol (A) | glycerin | SP value: 14.9 | | | | | |
| Wetting Agent | Polyhydric Alcohol (A) | 1,2-propanediol | SP value: 12.6 | | | | | |
| Wetting Agent | Polyhydric Alcohol (A) | 1,3-butanediol | SP value: 11.8 | 30.0% | 30.0% | | | |
| Wetting Agent | Polyhydric Alcohol (A) | 1,2-butanediol | SP value: 11.5 | | | 30.0% | 30.0% | 30.0% |
| Surfactant | | BYK-348 | Nv100% | 3.0% | 3.0% | 3.0% | 3.0% | 3.0% |
| Surfactant | | Surfynol 104E | Nv50% | 1.0% | 1.0% | 1.0% | 1.0% | 1.0% |
| Resin | (Meth)acrvlic Resin (B) | BYK-3565 | Nv100% | 0.5% | 0.5% | 0.5% | 0.5% | 0.5% |
| Resin | Other Resin | AQUACER 515 | Nv35% | 3.3% | 3.3% | 3.3% | 3.3% | 3.3% |
| pH Adjuster | | triethanolamine | | 1.0% | 1.0% | 1.0% | 1.0% | 1.0% |
| [on-exchanged Water | | | | 21.2% | 21.2% | 21.2% | 21.2% | 21.2% |
| Ratio of Polyhydric Alcohol (A) to total Wetting Agent | | | | 100.0% | 100.0% | 100.0% | 100.0% | 100.0% |
| Amount and ratio of Polyhydric Alcohol (A) and (Meth)acrylic Resin (B) | | blend amount of Polyhydric Alcohol (A) | | 30.0% | 30.0% | 30.0% | 30.0% | 30.0% |
| Amount and ratio of Polyhydric Alcohol (A) and (Meth)acrylic Resin (B) | | blend amount of (Meth) acrylic Resin (B) | | 0.5% | 0.5% | 0.5% | 0.5% | 0.5% |
| Amount and ratio of Polyhydric Alcohol (A) and (Meth)acrylic Resin (B) | | (A)/(B) | | 60 | 60 | 60 | 60 | 60 |
| Fluorine Atom Content (mass ppm) | | | | 0 | 0 | 0 | 0 | 0 |

(continued)

| | | | Example 39 | 40 | 41 | 42 | 43 |
|---|---|---|---|---|---|---|---|
| Evaluation Result | Evaluation 1 | Image Quality Evaluation Test | A | A | A | A | A |
| | Evaluation 2 | Long-Term Clogging Reliability Test | A | A | A | A | A |
| | Evaluation 3 | Printing Stability Test | A | A | A | A | A |
| | Evaluation 4 | Printed Item Drying Properties Test | A | A | A | A | A |
| | Evaluation 5 | Ink Storage Stability Test | A | A | A | A | A |

[Table 7]

Table 7

| | | | | Example 44 | 45 | 46 | 47 |
|---|---|---|---|---|---|---|---|
| Set of Resin-dispersed Pigment Dispersion | | | | 40.0% | 40.0% | 40.0% | 40.0% |
| Wetting Agent | Polyhydric Alcohol (A) | 1,3-butanediol | SP value : 11.8 | 30.0% | 30.0% | 30.0% | 30.0% |
| Surfactant | | BYK-348 | Nv100% | 3.0% | 3.0% | 3.0% | 3.0% |
| | | Surfynol 104E | Nv50% | 1.0% | 1.0% | 1.0% | 1.0% |
| Resin | (Meth)acrylic Resin (B) | (Meth) acrylic Resin A | Nv30% | 1.7% | | | |
| | | (Meth) acrylic Resin B | Nv30% | | 1.7% | | |
| | | (Meth) acrylic Resin C | Nv30% | | | 1.7% | |
| | | (Meth) acrylic Resin D | Nv30% | | | | 1.7% |
| | Other Resin | AQUACER 515 | Nv35% | 3.3% | 3.3% | 3.3% | 3.3% |
| pH Adjuster | | triethanolamine | | 1.0% | 1.0% | 1.0% | 1.0% |
| Ion-exchanged Water | | | | 20.0% | 20.0% | 20.0% | 20.0% |
| Ratio of Polyhydric Alcohol (A) to total Wetting Agent | | | | 100.0% | 100.0% | 100.0% | 100.0% |

(continued)

| | | | Example | | | |
|---|---|---|---|---|---|---|
| | | | 44 | 45 | 46 | 47 |
| Amount and ratio of Polyhydric Alcohol (A) and (Meth)acrylic Resin (B) | | blend amount of Polyhydric Alcohol (A) | 30.0% | 30.0% | 30.0% | 30.0% |
| | | blend amount of (Meth) acrylic Resin (B) | 1.7% | 1.7% | 1.7% | 1.7% |
| | | (A)/(B) | 18 | 18 | 18 | 18 |
| Fluorine Atom Content (mass ppm) | | | 0 | 0 | 0 | 0 |
| Evaluation Result | Evaluation 1 | Image Quality Evaluation Test | A | A | A | A |
| | Evaluation 2 | Long-Term Clogging Reliability Test | A | A | A | A |
| | Evaluation 3 | Printing Stability Test | A | A | B | A |
| | Evaluation 4 | Printed Item Drying Properties Test | A | A | A | A |
| | Evaluation 5 | Ink Storage Stability Test | B | A | A | A |

The details of the commercially available products given in Table 1 to 7 are as follows.

- · BYK-348: polyoxyethylene-modified polydimethylsiloxane manufactured by BYK-Chemie Japan K.K.
- · TEGO Glide 440: polyoxyethylene-modified polydimethylsiloxane manufactured by Evonik Japan Co., Ltd.
- · Surfynol 104E: acetylene glycol (solid content concentration 50%) manufactured by Nisshin Chemical Industry Co., Ltd.
- · BYK-3565: (meth)acrylic resin having a polydimethylsiloxane chain structure and a polyether chain structure on a side chain, and a weight average molecular weight of 2,000 to 30,000, manufactured by BYK-Chemie Japan K.K.
- · BYK-3550: (meth)acrylic resin having a polydimethylsiloxane chain structure on a side chain, and not having a polyether chain structure, manufactured by BYK-Chemie Japan K.K.
- · Joncryl HPD496: (meth)acrylic resin (water-soluble resin, weight average molecular weight 5,000, solid content concentration 34%) manufactured by BASF Corporation
- · Joncryl HPD96-E: (meth)acrylic resin (water-soluble resin, weight average molecular weight 16,000, solid content concentration 34%) manufactured by BASF Corporation
- · JE-1056: (meth)acrylic resin emulsion (water-insoluble resin, solid content concentration 42.5%) manufactured by Seiko PMC Corporation.
- · PTFE D-210: fluororesin (polytetrafluoroethylene) emulsion (water-insoluble resin, solid content concentration 60%) manufactured by Daikin Industries, Ltd.
- · AQUACER 515: olefin resin emulsion (water-insoluble resin, solid content concentration 35%) manufactured by BYK-Chemie Japan K.K.

Note that in a case where PTFE D-210 is contained at 1% by mass (0.6% by mass as solid content) in the total amount of the aqueous ink, the fluorine atom content in the aqueous ink is approximately 4286 [mass ppm].

<4. Evaluation of Four-Color Sets of Aqueous Inks>

The four-color sets of aqueous inks obtained in Examples 1 to 47 and Comparative Examples 1 to 20 were used to carry out evaluations regarding the following. Note that in all of the evaluations, A, B, and C evaluations were judged to be of practically usable quality.

(Evaluation 1: Image Quality Evaluation Test)

Each four-color set given in Tables 1 to 7 was filled into an inkjet discharge apparatus fitted with a head (QA06NTB) manufactured by Kyocera Corporation. Next, under printing conditions of a frequency of 30 kHz and 600 ×

600 dpi, ink was discharged onto OK Topcoat+ (basis weight 104.7 g/$m^2$) which is a coated paper manufactured by Oji Paper Co., Ltd., to print a color chart image (JIS X 9204:2004, image identification number S6). Immediately after printing, drying was then carried out for 3 minutes using a 60°C air oven, after which the resulting printed color chart image was evaluated with the naked eye and using a magnifying glass with regard to mixed color bleeding. The evaluation criteria were as follows.

(Evaluation Criteria)

A: no mixed color bleeding was visible under the magnifying glass or with the naked eye
B: slight mixed color bleeding was visible under the magnifying glass, but no mixed color bleeding was visible with the naked eye
C: slight mixed color bleeding was visible with the naked eye
D: mixed color bleeding was clearly visible with the naked eye

(Evaluation 2: Long-Term Clogging Reliability Test)

The inkjet discharge apparatus used in Evaluation 1 was filled with each four-color set and nozzle cleaning was performed, after which the apparatus was left to stand for a certain period of time without a head cap. A nozzle check pattern was then printed, and the occurrence of nozzle misfiring and flight deflection was checked to thereby evaluate long-term clogging reliability. The evaluation criteria were as follows.

(Evaluation Criteria)

A: even after being left to stand for 120 minutes at room temperature (25°C), the number of nozzles in which nozzle misfiring or flight deflection occurred was less than 10 in all four colors
B: after being left to stand for 60 minutes at room temperature (25°C), the number of nozzles in which nozzle misfiring or flight deflection occurred was less than 10 in all four colors, but when left to stand for 120 minutes, the number of nozzles in which nozzle misfiring or flight deflection occurred was 10 or more in one or more colors
C: after being left to stand for 5 minutes at room temperature (25°C), the number of nozzles in which nozzle misfiring or flight deflection occurred was less than 10 in all four colors, but when left to stand for 60 minutes, the number of nozzles in which nozzle misfiring or flight deflection occurred was 10 or more in one or more colors
D: when left to stand for 5 minutes at room temperature (25°C), the number of nozzles in which nozzle misfiring or flight deflection occurred was 10 or more in one or more colors

(Evaluation 3: Printing Stability Test)

The inkjet discharge apparatus used in Evaluation 1 was filled with each four-color set. Next, under printing conditions of a frequency of 30 kHz and 600 × 600 dpi, ink was discharged onto OK Topcoat+ (basis weight 104.7 g/$m^2$) which is a coated paper manufactured by Oji Paper Co., Ltd., to print a predetermined number of consecutive color chart images (JIS X 9204:2004, image identification number S6). A nozzle check pattern was then printed, and the occurrence of nozzle misfiring and flight deflection was checked to thereby evaluate printing stability. The evaluation criteria were as follows.

(Evaluation Criteria)

A: even after printing 100 color chart images, the number of nozzles in which nozzle misfiring or flight deflection occurred was less than 10 in all four colors
B: even after printing 50 color chart images, the number of nozzles in which nozzle misfiring or flight deflection occurred was less than 10 in all four colors
C: even after printing 30 color chart images, the number of nozzles in which nozzle misfiring or flight deflection occurred was less than 10 in all four colors
D: when 30 color chart images were printed, the number of nozzles in which nozzle misfiring or flight deflection

occurred was 10 or more in one or more colors

(Evaluation 4: Printed Item Drying Properties Test)

The inkjet discharge apparatus used in Evaluation 1 was filled with each four-color set. Next, under printing conditions of a frequency of 30 kHz and 600 × 600 dpi, cyan aqueous ink, magenta aqueous ink, and yellow aqueous ink were discharged until reaching a coverage rate of 80% onto the same location on OK Topcoat+ (basis weight 104.7 $g/m^2$) which is a coated paper manufactured by Oji Paper Co., Ltd., to print a CMY three-color image (total coverage rate 240%). The printed item drying properties were then evaluated by pressing filter paper onto the printed item after leaving the printed item to stand at room temperature (25°C) for a predetermined period of time and measuring the time it took for the ink to no longer transfer to the filter paper. The evaluation criteria were as follows.

(Evaluation Criteria)

A: there was no longer any transfer to the filter paper after leaving the printed item to stand for 10 seconds at room temperature (25°C)
A: there was no longer any transfer to the filter paper after leaving the printed item to stand for 20 seconds at room temperature (25°C)
C: there was no longer any transfer to the filter paper after leaving the printed item to stand for 30 seconds at room temperature (25°C)
D: there was still transfer to the filter paper even after leaving the printed item to stand for 30 seconds at room temperature (25°C)

(Evaluation 5: Ink Viscosity Stability Test)

The viscosity of each aqueous ink was measured under conditions of a temperature of 25°C and a rotational speed of 50 rpm using an E-type viscometer (TVE-20L manufactured by Toki Sangyo Co., Ltd.). Next, the viscosity stability of the inks was evaluated by measuring the viscosity of the aqueous inks once again after storing the aqueous inks for a predetermined period of time in a thermostatic chamber at 70°C. The evaluation criteria were as follows.

(Evaluation Criteria)

A: the rate of change in viscosity after storage for four weeks was less than ±10% in all four colors
B: the rate of change in viscosity after storage for two weeks was less than ±10% in all four colors
C: the rate of change in viscosity after storage for one week was less than ±10% in all four colors
D: the rate of change in viscosity after storage for one week was ±10% or more in one or more colors out of the four colors

From the above, it was found that an aqueous ink using a wetting agent having a solubility parameter value (SP value) of 11.0 to 15.0 $(cal/cm^3)^{1/2}$ and also using the (meth)acrylic resin (B) has improved image quality with respect to low-absorption substrates and the like and also improved printing stability, as well as excellent drying properties and storage stability for printed items. Furthermore, further improvements in quality were achieved by selecting the type of wetting agent and other resins.

## Claims

**1.** An aqueous ink for inkjet printing containing a colorant, a resin, a wetting agent, a surfactant, and water, wherein

the wetting agent contains a polyhydric alcohol at 60% by mass or more with respect to a total amount of the wetting agent, the polyhydric alcohol having a solubility parameter value (SP value) of 11.0 to 15.0 $(cal/cm^3)^{1/2}$,
the resin contains a (meth)acrylic resin having a polydimethylsiloxane chain structure and a polyether chain structure on a side chain and a weight average molecular weight of 2,000 to 30,000,
the (meth)acrylic resin is water soluble,

a ratio of a blend amount of the polyhydric alcohol to a blend amount of the (meth)acrylic resin is 1500:1 to 6:1 by mass ratio, and
a content of fluorine atoms in a total amount of the aqueous ink is 500 mass ppm or less.

**2.** The aqueous ink for inkjet printing according to Claim 1, wherein the colorant is a pigment, and a content of the pigment is 0.5 to 15% by mass in the total amount of the aqueous ink.

**3.** The aqueous ink for inkjet printing according to Claim 1 or 2, wherein a content of the polyhydric alcohol is 0.5 to 50% by mass in the total amount of the aqueous ink.

**4.** The aqueous ink for inkjet printing according to any of Claims 1 to 3, wherein a content of the (meth)acrylic resin is 0.01 to 5% by mass in the total amount of the aqueous ink.

**5.** The aqueous ink for inkjet printing according to any of Claims 1 to 4, wherein the wetting agent does not contain 2% by mass or more of a wetting agent having a carbon number of 8 or more, in the total amount of the aqueous ink.

**6.** The aqueous ink for inkjet printing according to any of Claims 1 to 5, wherein the wetting agent contains a polyhydric alcohol at 60% by mass or more relative to the total amount of the wetting agent, the polyhydric alcohol having a solubility parameter value (SP value) of 11.0 to 13.0 $(cal/cm^3)^{1/2}$.

**7.** A printed item obtained using the aqueous ink for inkjet printing according to any of Claims 1 to 6.

**Patentansprüche**

**1.** Wässrige Tinte zum Tintenstrahldrucken, die ein Farbmittel, ein Harz, ein Netzmittel, ein Tensid und Wasser enthält, wobei

das Netzmittel einen mehrwertigen Alkohol zu 60 Massenprozent oder mehr, bezogen auf die Gesamtmenge des Netzmittels, enthält, wobei der mehrwertige Alkohol einen Löslichkeitsparameterwert (SP-Wert) von 11,0 bis 15,0 $(cal/cm^3)^{1/2}$ aufweist,
das Harz ein (Meth)acrylharz mit einer Polydimethylsiloxan-Kettenstruktur und einer Polyether-Kettenstruktur an einer Seitenkette und einem gewichtsmittleren Molekulargewicht von 2.000 bis 30.000 enthält,
das (Meth)acrylharz wasserlöslich ist,
ein Verhältnis einer Mischungsmenge des mehrwertigen Alkohols zu einer Mischungsmenge des (Meth)acrylharzes 1500:1 bis 6:1 bezogen auf das Massenverhältnis beträgt, und
der Gehalt an Fluoratomen in der Gesamtmenge der wässrigen Tinte 500 Massen-ppm oder weniger beträgt.

**2.** Wässrige Tinte zum Tintenstrahldrucken nach Anspruch 1, wobei das Farbmittel ein Pigment ist und ein Gehalt des Pigments 0,5 bis 15 Massenprozent in der Gesamtmenge der wässrigen Tinte beträgt.

**3.** Wässrige Tinte zum Tintenstrahldrucken nach Anspruch 1 oder 2, wobei ein Gehalt an mehrwertigem Alkohol 0,5 bis 50 Massenprozent in der Gesamtmenge der wässrigen Tinte beträgt.

**4.** Wässrige Tinte zum Tintenstrahldrucken nach einem der Ansprüche 1 bis 3, wobei ein Gehalt des (Meth)acrylharzes 0,01 bis 5 Massenprozent in der Gesamtmenge der wässrigen Tinte beträgt.

**5.** Wässrige Tinte zum Tintenstrahldrucken nach einem der Ansprüche 1 bis 4, wobei das Netzmittel nicht 2 Massenprozent oder mehr eines Netzmittels mit einer Kohlenstoffzahl von 8 oder mehr in der Gesamtmenge der wässrigen Tinte enthält.

**6.** Wässrige Tinte zum Tintenstrahldrucken nach einem der Ansprüche 1 bis 5, wobei das Netzmittel einen mehrwertigen Alkohol mit 60 Massenprozent oder mehr, bezogen auf die Gesamtmenge des Netzmittels, enthält, wobei der mehrwertige Alkohol einen Löslichkeitsparameterwert (SP-Wert) von 11,0 bis 13,0 $(cal/cm^3)^{1/2}$ aufweist.

**7.** Druckerzeugnis, das unter Verwendung der wässrigen Tinte zum Tintenstrahldrucken nach einem der Ansprüche 1 bis 6 erhalten ist.

## Revendications

1. Encre aqueuse pour impression à jet d'encre contenant un colorant, une résine, un agent mouillant, un surfactant, et de l'eau, dans laquelle

   l'agent mouillant contient un polyalcool à 60 % en masse ou plus par rapport à une quantité totale de l'agent mouillant, le polyalcool ayant une valeur de paramètre de solubilité (valeur SP) de 11,0 à 15,0 $(cal/cm^3)^{1/2}$,
   la résine contient une résine (méth)acrylique ayant une structure de chaîne polydiméthylsiloxane et une structure de chaîne polyéther sur une chaîne latérale et un poids moléculaire moyen en poids de 2 000 à 30 000,
   la résine (méth)acrylique est soluble dans l'eau,
   le rapport entre une quantité de mélange du polyalcool et une quantité de mélange de la résine (méth)acrylique est de 1 500:1 à 6:1 en rapport en masse, et
   une teneur en atomes de fluor de une quantité totale d'encre aqueuse est de 500 ppm en masse ou moins.

2. Encre aqueuse pour impression à jet d'encre selon la revendication 1, dans laquelle le colorant est un pigment, et une teneur en pigment est de 0,5 à 15 % en masse dans la quantité totale de l'encre aqueuse.

3. Encre aqueuse pour impression à jet d'encre selon la revendication 1 ou 2, dans laquelle une teneur en polyalcool est de 0,5 à 50 % en masse dans la quantité totale de l'encre aqueuse.

4. Encre aqueuse pour impression à jet d'encre selon l'une quelconque des revendications 1 à 3, dans laquelle une teneur en résine (méth)acrylique est de 0,01 à 5 % en masse dans la quantité totale de l'encre aqueuse.

5. Encre aqueuse pour impression à jet d'encre selon l'une quelconque des revendications 1 à 4, dans laquelle l'agent mouillant ne contient pas 2 % en masse ou plus d'un agent mouillant ayant un nombre d'atomes de carbone de 8 ou plus, dans la quantité totale de l'encre aqueuse.

6. Encre aqueuse pour impression à jet d'encre selon l'une quelconque des revendications 1 à 5, dans laquelle l'agent mouillant contient un polyalcool à 60 % en masse ou plus par rapport à la quantité totale de l'agent mouillant, le polyalcool ayant une valeur de paramètre de solubilité (valeur SP) de 11,0 à 13,0 $(cal/cm^3)^{1/2}$.

7. Article imprimé obtenu à l'aide de l'encre aqueuse pour impression à jet d'encre selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004043518 A
- WO 00022056 A
- JP 2007238813 A
- JP H326724 A
- JP 2009263553 A
- WO 2018181645 A
- JP 2020038302 A


### Non-patent literature cited in the description


- **J.A. BRYDSON.** Plastics Materials. Butterworth-Heinemann, 1995